# EUROPÄISCHE PATENTSCHRIFT

(11) **EP 3 927 966 B1**
(45) Veröffentlichungstag und Bekanntmachung des Hinweises auf die Patenterteilung: **29.05.2024**
(21) Anmeldenummer: 20706415.5
(22) Anmeldetag: 13.02.2020
(51) Int. Cl.: F03D 13/20, E04H 12/12, E04H 12/08

(54) **STAHLTURMRINGSEGMENT FÜR EINEN WINDENERGIEANLAGEN-TURMABSCHNITT UND VERFAHREN**
ANNULAR STEEL-TOWER SEGMENT FOR A WIND TURBINE TOWER PORTION, AND METHOD
SEGMENT ANNULAIRE DE TOUR EN ACIER POUR UNE PARTIE DE TOUR D'ÉOLIENNE ET PROCÉDÉ

(30) Priorität: 20.02.2019 DE 102019104350
(43) Veröffentlichungstag der Anmeldung: 29.12.2021
(73) Patentinhaber: Wobben Properties GmbH, 26607 Aurich (DE)
(72) Erfinder: HOFFMANN, Alexander, 26721 Emden (DE); HARMS, Harro, 26639 Wiesmoor (DE); MERTENS, Rene, 16515 Oranienburg (DE); HAASE, Daniel, 26127 Oldenburg (DE)
(74) Vertreter: Eisenführ Speiser
(86) Internationale Anmeldenummer: PCT/EP2020/053723
(87) Internationale Veröffentlichungsnummer: WO 2020/169441

(56) Entgegenhaltungen:
- EP-A1- 2 798 134
- CN-U- 207 715 298
- ES-A1- 2 356 679
- US-A1- 2011 131 898

## Beschreibung

Die Erfindung betrifft ein Stahlturmringsegment für einen Windenergieanlagen-Turmabschnitt, einen Windenergieanlagen-Turmabschnitt, einen Windenergieanlagen-Turm und eine Windenergieanlage sowie Verfahren zur Herstellung eines Stahlturmringsegments und eines Windenergieanlagen-Turmabschnitts.

Windenergieanlagen der eingangs genannten Art sind hinlänglich bekannt. Der derzeit gängigste Typ einer Windenergieanlage ist die sogenannte Horizontalachsen-Windenergieanlage, die üblicherweise mit drei Rotorblättern ausgestattet ist, wobei auch Windenergieanlagen mit weniger oder mehr Rotorblättern möglich sind. Windenergieanlagen weisen zunehmend größeren Bauformen auf, um einerseits eine höhere Nennleistung erreichen zu können, und andererseits eine bessere Ausnutzung des Windes zu ermöglichen.

Windenergieanlagen umfassen neben einem an einer Gondel angeordneten Rotor in der Regel einen Turm, auf dem die Gondel mit dem Rotor um eine im Wesentlichen vertikal ausgerichtete Achse drehbar angeordnet ist. Türme sind in der Regel schlanke Bauwerke, die vorzugsweise eine große Höhe aufweisen und ferner vorzugsweise orthogonal zu dieser Höhe vergleichsweise geringe Abmessungen aufweisen. Türme bestehen vorzugsweise im Wesentlichen aus Stahl und/oder Beton oder umfassen diese Materialien.

Die Bandbreite der Ausführung für Türme reicht von Gitterkonstruktionen über Stahlrohrtürme mit oder ohne Seilabspannung bis hin zu Betonbauten.

Stahlrohrtürme können aus einem einzelnen Bauteil oder mehreren Bauteilen bestehen oder derartige Bauteile umfassen. Türme können zylindrische und/oder konische Abschnitte, insbesondere entlang ihrer Längserstreckung, aufweisen. Diese Bereiche weisen in der Regel ringförmige Abschnitte auf. Darüber hinaus können derartige ringförmige Abschnitte zusätzlich auch entlang ihrer Umfangsrichtung geteilt ausgebildet sein, sodass ein zylindrischer Abschnitt aus verschiedenen Segmenten in Umfangsrichtung zusammengesetzt ist. Einzelne zylindrische und/oder konische Abschnitte von Türmen können beispielsweise Einzelteilgewichte von ca. 30 t bis 80 t aufweisen.

Türme von Windenergieanlagen, insbesondere von modernen Horizontalachsen-Windenergieanlagen, tragen zu einem erheblichen Teil zu den Gesamtkosten der Herstellung einer Windenergieanlage bei. Insbesondere die größer werdenden Rotordurchmesser und Nabenhöhen von Windenergieanlagen führen dazu, dass auch die Türme größer werden und in der Regel zusätzlich auch höheren Belastungen ausgesetzt sind. Die Türme werden einerseits hinsichtlich ihrer Höhe größer und andererseits in Bezug auf ihren Durchmesser, der bei einer Vielzahl heutiger Windenergieanlagen bereits 8 Meter und mehr aufweist.

Windenergieanlagen-Türme umfassen daher in der Regel mehrere vertikal benachbarte Turmsegmente. Diese vertikal benachbarten Turmsegmente werden in der Regel mit an den Turmsegmenten angeordneten Flanschen miteinander verbunden. Die Flansche werden üblicherweise an den Enden der Turmsegmente angeschweißt oder sind mit der übrigen Turmwandung integral verbunden. Um die erforderliche Festigkeit von Windenergieanlagen-Türmen, insbesondere von solchen Türmen, mit den im Vorhergehenden beschriebenen Abmessungen, gewährleisten zu können, werden die Flansche groß dimensioniert. Dadurch wird unter anderem die erforderliche Ringsteifigkeit und/oder Krempelsteifigkeit gewährleistet, insbesondere zur Gewährleistung geringer Schraubenbeanspruchung. Dies führt zu einem erheblichen Aufwand in der Fertigung und Montage.

Darüber hinaus werden durch die groß dimensionierten Flansche erhebliche Materialkosten für den einzusetzenden Stahl aufgewendet. Die groß dimensionierten Flansche führen außerdem zu einer Verengung des Turminnenraums. Im Gegensatz zu anderen Innenräumen von in Windenergieanlagen eingesetzten Bauteilen wird der Innenraum von Türmen oftmals genutzt, beispielsweise um Kabel zu verlegen, Wartungs- und Montageplattformen anzubringen oder Komponenten wie beispielsweise ein E-Modul aufzunehmen. Ferner ist die Verbindung von auf Druck belasteten Bauteilen, die mit einem Biegemoment beaufschlagt werden, wie Türme und Turmabschnitte, durch speziell ausgebildete Komponenten vorzusehen.

Im Stand der Technik bestehen verschiedene Ansätze zur Verbesserung der Verbindung von Turmsegmenten. Die WO 2018/172386 A1 beschreibt beispielsweise ein Flanschsegment für ein Windenergieanlagen-Stahlturmringsegment mit einem Flanschvorsprung. Ferner wird in der EP 2 789 134 A1 eine Flanschverbindung von vertikal benachbarten Turmsegmenten beschrieben, wobei die miteinander verbundenen Flansche einen erheblichen Materialaufwand erfordern und die Verbindung somit hohe Kosten verursacht.

Das Deutsche Patent- und Markenamt hat in der Prioritätsanmeldung zur vorliegenden Anmeldung folgenden Stand der Technik recherchiert: US 2005/0 129 504 A1, US 2015/0 159 635 A1, EP 2 798 134 A1, WO 2013/ 097 866A1, WO 2018/ 172 386 A1.

Es ist daher eine Aufgabe der vorliegenden Erfindung, ein Stahlturmringsegment für einen Windenergieanlagen-Turmabschnitt, einen Windenergieanlagen-Turmabschnitt, einen Windenergieanlagen-Turm und eine Windenergieanlage sowie Verfahren zur Herstellung eines Stahlturmringsegments und Windenergieanlagen-Turmabschnitts bereitzustellen, welche einen oder mehrere der genannten Nachteile vermindern oder beseitigen. Insbesondere ist es eine Aufgabe der Erfindung, eine Lösung bereitzustellen, die einen Windenergieanlagen-Turm mit einer höheren Festigkeit und/oder einer montagefreundlicheren Ausbildung und/oder einer gewichtsreduzierten Ausbildung ermöglicht.

Gemäß einem ersten Aspekt wird die eingangs genannte Aufgabe gelöst durch ein Stahlturmringsegment für einen Windenergieanlagen-Turmabschnitt, umfassend ein erstes Mantelsegment, mit einer Segmenthöhe, einer Segmentlänge in Segmentumfangsrichtung, einer ersten Segmentstärke, und einer ersten Horizontalstoßseite, wobei das erste Mantelsegment in einem Bereich angrenzend an die erste Horizontalstoßseite einen ersten Verdickungsbereich aufweist, wobei der erste Verdickungsbereich eine erste Verdickungsstärke aufweist, und die erste Verdickungsstärke größer ist als die erste Segmentstärke, wobei der erste Verdickungsbereich eine erste Aussparung aufweist, wobei die erste Aussparung beabstandet von der ersten Horizontalstoßseite angeordnet ist, und wobei eine erste Durchgangsöffnung von der ersten Aussparung zu der ersten Horizontalstoßseite führt.

Das erste Mantelsegment erstreckt sich in Richtung der Segmenthöhe, der ersten Segmentstärke und in Segmentumfangsrichtung. Im Einbauzustand des Windenergieanlagen-Turmabschnitts in einem Windenergieanlagen-Turm erstreckt sich die erste Segmentstärke vorzugsweise im Wesentlichen in radialer Richtung des Windenergieanlagen-Turms. Die Segmenthöhe erstreckt sich vorzugsweise im Wesentlichen parallel zu einer Turmlängsachse. Geringe Abweichungen von der Parallelität der Segmenthöhe und einer Turmlängsachse kann durch einen konisch ausgebildeten Windenergieanlagen-Turmabschnitt entstehen.

Die Segmentlänge in Segmentumfangsrichtung ist insbesondere als eine Bogenlänge zu verstehen, da Mantelsegmente für Windenergieanlagen-Turmabschnitte häufig gekrümmt sind. Das erste Mantelsegment kann einen ringförmigen Querschnitt aufweisen, wobei ein ringförmiger Querschnitt auch polygonal ausgebildet sein kann. Darüber hinaus kann das erste Mantelsegment einen teilringförmigen Querschnitt aufweisen. Das Mantelsegment erstreckt sich vorzugsweise in Richtung der Segmenthöhe von einem unteren Ende zu einem oberen Ende. An dem unteren Ende oder an dem oberen Ende ist die erste Horizontalstoßseite ausgebildet. Die erste Horizontalstoßseite ist insbesondere derart ausgebildet, dass mit dieser an eine zweite Horizontalstoßseite eines zweiten Mantelsegments angestoßen werden kann. Insbesondere sind mittels dieser Horizontalstoßseiten zwei Mantelsegmente aneinander anordenbar.

In einem Bereich angrenzend an die erste Horizontalstoßseite weist das erste Mantelsegment einen ersten Verdickungsbereich auf. Der Verdickungsbereich zeichnet sich insbesondere dadurch aus, dass dieser eine größere Materialstärke aufweist als die übrigen Wandbereiche des Mantelsegments. Vorzugsweise erhöht sich die Wandstärke des Mantelsegments von den übrigen Wandbereichen mit der Segmentstärke hin zu dem Verdickungsbereich mit der ersten Verdickungsstärke, die größer ist als die erste Segmentstärke.

Der erste Verdickungsbereich weist die erste Aussparung auf. Die erste Aussparung erstreckt sich vorzugsweise in Richtung der ersten Segmentstärke, in Segmentumfangsrichtung und in Richtung der Segmenthöhe. Die Aussparung kann einseitig oder zweiseitig offen sein. Vorzugsweise ist die erste Aussparung einseitig offen ausgebildet und kann im Betriebszustand des Stahlturmringsegments von dem Inneren eines Windenergieanlagen-Turmes zugänglich sein. Alternativ oder zusätzlich kann die erste Aussparung derart angeordnet sein, dass diese im Betriebszustand des Stahlturmringsegments von einer Außenseite des Windenergieanlagen-Turmes zugänglich ist. Die erste Aussparung ist in radialer Richtung des Turmes und/oder in Richtung der Segmentstärke und/oder der Verdickungsstärke offen ausgebildet.

Die erste Aussparung ist von der ersten Horizontalstoßseite beabstandet. Die der Horizontalstoßseite zugewandte erste Befestigungsseite der Aussparung ist vorzugsweise mehr als 5 cm, mehr als 10 cm, mehr als 20 cm, mehr als 30 cm, mehr als 40 cm, und/oder mehr als 50 cm von der ersten Horizontalstoßseite beabstandet.

Die erste Durchgangsöffnung führt von der ersten Aussparung zu der ersten Horizontalstoßseite. Die erste Durchgangsöffnung weist vorzugsweise zwei offene Enden auf, wobei ein erstes Ende an die erste Aussparung angrenzt und ein zweites Ende an die erste Horizontalstoßseite angrenzt. Die erste Durchgangsöffnung ist vorzugsweise derart ausgebildet, dass ein Befestigungselement, insbesondere ein Bolzen mit einem Gewinde, sich von der ersten Aussparung durch die Durchgangsöffnung hindurch, bis zur ersten Horizontalstoßseite erstrecken kann. Vorzugsweise weist die erste Durchgangsöffnung eine erste Durchgangsachse auf, wobei die erste Durchgangsachse zumindest teilweise durch eine Wandung des ersten Mantelsegments führt.

Der Erfindung liegt unter anderem die Erkenntnis zugrunde, dass die Verbindungen von bekannten Windenergieanlagen-Turmabschnitten einen ungünstigen Kraftfluss aufweisen. Der in den Turmwandungen geführte Kraftfluss ist nicht parallel zu dem Kraftfluss der Verbindungselemente, die die beiden aneinander anstoßenden Flansche miteinander verbinden. Durch dieses Auseinanderfallen der Kraftflusslinien entstehen Hebelwirkungen. Diese Hebelwirkungen führen unter anderem dazu, dass die Flansche besonders groß dimensioniert sein müssen.

Der Erfindung liegt darüber hinaus die Erkenntnis zugrunde, dass die bekannten Flanschverbindungen den Bauraum innerhalb eines Windenergieanlagen-Turmes verringern. Bekannte Verbindungen sind bei den auf Druck und mit einem Biegemoment belasteten Türmen nicht oder lediglich mit Anpassungen einsetzbar, da sich diese beispielsweise lösen können.

Durch die im Vorherigen genannten Aussparungen in dem Verdickungsbereich des Stahlturmringsegments wird die Achse eines Befestigungselements, die durch die erste Durchgangsöffnung geführt ist, in die Richtung der Hauptkraftflusslinie des Stahlturmringsegments verschoben. Dadurch ergibt sich die Möglichkeit, dass die Hauptkraftflusslinie des Stahlturmringsegments im Wesentlichen mit der Verbindungsachse von Verbindungselementen zusammenfällt. Insbesondere besteht die Möglichkeit, dass die horizontale Beabstandung dieser Kraftflusslinien geringer oder aufgehoben ist.

Das im Vorherigen genannte Stahlturmringsegment führt in vorteilhafter Weise zu einem verringerten Materialeinsatz. Dadurch wird die Fertigung vereinfacht und darüber hinaus werden Materialkosten eingespart. Es hat sich darüber hinaus gezeigt, dass bei der Verbindung von zwei benachbarten Stahlturmringsegmenten eine Verringerung der Schraubenanzahl von 25 % erzielt werden kann, da die erforderlichen Verbindungskräfte geringer sind. Insgesamt kann sich hierdurch eine erhebliche Gewichtsreduktion ergeben. Dies ist insbesondere bei großen Abmessungen von Vorteil, wo Gewichtsgrenzen beispielsweise für den Transport bestehen. Ferner ist die Tragfähigkeit der auszubildenden Verbindung in vorteilhafter Weise verbessert. Durch den verbesserten Kraftfluss wird darüber hinaus die Langlebigkeit einer Windenergieanlage mit einem solchen Stahlturmringsegment verbessert. Darüber hinaus lässt sich das Stahlturmringsegment in vorteilhafter Weise einfacher montieren, beispielsweise bereits aufgrund der verringerten Schraubenanzahl.

Gemäß einer bevorzugten Ausführungsvariante ist vorgesehen, dass die erste Durchgangsöffnung eine im Wesentlichen parallel zu der Segmenthöhe ausgerichtete Durchgangsachse aufweist. Die parallel zu der Segmenthöhe ausgerichtete Durchgangsachse der ersten Durchgangsöffnung ermöglicht einen vorteilhaften Kraftfluss. Der Kraftfluss kann im Wesentlichen gerade verlaufen, ohne dass dieser in größeren Abschnitten gewinkelt zum sonstigen Kraftfluss verläuft. Hiermit kann weiter Material eingespart werden und die Verbindung weist eine generelle Langlebigkeit auf.

Es ist vorgesehen, dass sich die erste Aussparung in Richtung der ersten Segmentstärke vollständig durch den ersten Verdickungsbereich erstreckt. Eine derart ausgebildete erste Aussparung weist insbesondere in Richtung der Segmentstärke eine erste und eine zweite Öffnung auf. Die erste Aussparung kann im bestimmungsgemäßen Betrieb des Stahlturmringsegments eine oder zwei Abdeckungen aufweisen. Eine als Durchgang ausgebildete erste Aussparung hat den Vorteil, dass diese fertigungstechnisch in günstiger Weise eingebracht werden kann.

Gemäß einer weiteren bevorzugten Ausführungsvariante des Stahlturmringsegments ist vorgesehen, dass eine der ersten Horizontalstoßseite zugewandte erste Befestigungsseite der ersten Aussparung eine plane Fläche aufweist, wobei vorzugsweise die plane Fläche an die Durchgangsöffnung angrenzt, und/oder die erste Befestigungsseite konkav ausgebildet ist, und vorzugsweise ein Querbolzen mit einer konvexen Auflageseite an der ersten Befestigungsseite anordenbar ist, und/oder die erste Befestigungsseite rinnenförmig ausgebildet ist, wobei ein Rinnengrund in Richtung der ersten Verdickungsstärke ausgerichtet ist, und der Querschnitt orthogonal zu der Richtung der ersten Verdickungsstärke halbkreisförmig ausgebildet ist, und vorzugsweise an der ersten Befestigungsseite ein Querbolzen mit halbkreisförmigen Querschnitt anordenbar ist. Vorzugsweise ist die der Befestigungsseite abgewandte Seite der Aussparung konkav ausgebildet. Vorzugsweise weist die Aussparung orthogonal zu der Richtung der Verdickungsstärke und/oder der Segmentstärke einen ovalen und/oder rennbahnförmigen Querschnitt auf.

Die plane Fläche der ersten Aussparung ist vorzugsweise derart ausgebildet, dass an dieser ein Kraftverteilungselement, beispielsweise eine Unterlegscheibe, anordenbar ist, sodass zwischen der planen Fläche und einem Schraubenkopf das Kraftverteilungselement anordenbar ist.

Die konkav ausgebildete erste Befestigungsseite hat den Vorteil, dass zur Verbindung des Stahlturmringsegments mit einem benachbarten Stahlturmringsegment ein Querbolzen an der ersten Befestigungsseite vorteilhaft angebracht werden kann. Vorzugsweise ist der Querschnitt der konkaven Befestigungsseite korrespondierend zu einer konvexen Auflageseite eines Querbolzens ausgebildet.

Die rinnenförmige erste Befestigungsseite hat vorzugsweise orthogonal zur Richtung des Rinnengrunds einen Befestigungsseiten-Querschnitt, der vorzugsweise halbkreisförmig ausgebildet ist. Eine derartig ausgebildete erste Befestigungsseite ermöglicht in vorteilhafter Weise die Anordnung eines Querbolzens, der in Verbindung mit einem Gewindebolzen eine vorteilhafte Verbindung mit einem benachbarten Stahlturmringsegment ermöglicht.

Eine weitere bevorzugte Fortbildung des Stahlturmringsegments sieht vor, dass der erste Verdickungsbereich einen ersten Übergangsbereich aufweist, wobei im Übergangsbereich eine Mantelsegmentstärke von der ersten Segmentstärke hin zur ersten Verdickungsstärke ansteigt, vorzugsweise kontinuierlich ansteigt.

Die erste Verdickungsstärke ist größer als die erste Segmentstärke. Die Segmentstärke beschreibt insbesondere die Stärke des Mantelsegments zwischen zwei gegenüberliegenden, an die Horizontalstoßseiten angrenzenden Verdickungsbereichen eines Stahlturmringsegments. Die Verdickungsstärke wird von dem Stahlturmringsegment lediglich benachbart zu den Horizontalstoßseiten aufgewiesen. Um einen kraftflusstechnisch optimierten Übergang von der Segmentstärke zu der Verdickungsstärke zu gewährleisten, sieht diese bevorzugte Fortbildung den ersten Übergangsbereich vor. Der Übergangsbereich kann eine gerade, konvexe oder konkave Ausbildung annehmen.

In einer weiteren Fortbildung des Stahlturmringsegments ist vorgesehen, dass ausgehend von der ersten Horizontalstoßseite eine erste Befestigungsöffnung, die vorzugsweise als Sackloch ausgebildet ist, in dem ersten Verdickungsbereich angeordnet ist, deren Befestigungsöffnungsachse im Wesentlichen parallel zur Durchgangsachse der ersten Durchgangsöffnung ausgerichtet ist, und die erste Befestigungsöffnung in Segmentumfangsrichtung versetzt zu der ersten Durchgangsöffnung angeordnet ist.

Die erste Befestigungsöffnung ist insbesondere dafür vorgesehen, um ein Befestigungselement aufzunehmen, das ausgehend von einer zweiten Aussparung eines zweiten Stahlturmringsegments durch eine zweite Durchgangsöffnung hindurch sich bis hin zu der ersten Befestigungsöffnung erstrecken kann. Zwei vertikal benachbarte Stahlturmringsegmente weisen vorzugsweise und, wie im weiteren Verlauf noch weiter erläutert wird, jeweils Aussparungen mit Durchgangsöffnungen auf, durch die Befestigungselemente hindurchgeführt werden können und diese Befestigungselemente in Befestigungsöffnungen des benachbarten Stahlturmringsegments enden. Die erste Befestigungsöffnung weist vorzugsweise ein Innengewinde auf. Insbesondere ist die Befestigungsöffnung ausgebildet, um ein Befestigungselement, insbesondere einen Gewindebolzen oder eine Schraube, aufzunehmen.

In einer weiteren bevorzugten Ausführungsvariante des Stahlturmringsegments ist vorgesehen, dass sich das Mantelsegment orthogonal zu der Segmenthöhe und orthogonal zu der Segmentumfangsrichtung in einer radialen Richtung erstreckt, und der erste Verdickungsbereich in radialer Richtung in eine erste Richtung und in eine der ersten Richtung entgegengesetzt gerichtete zweite Richtung vorspringt, und vorzugsweise der erste Verdickungsbereich mit der gleichen Vorsprungslänge in die erste Richtung und in die zweite Richtung vorspringt. Die radiale Richtung in vorzugsweise parallel zur Richtung der Verdickungsstärke und/oder der Segmentstärke.

Ein Stahlturmringsegment-Querschnitt, der orthogonal zur Segmentumfangsrichtung ausgebildet ist, weist in dieser bevorzugten Ausführungsvariante die Geometrie eines umgedrehten T auf. Vorzugsweise ist zwischen den Flanken des T und dem mittigen Bereich des T der Übergangsbereich angeordnet, der wie im Vorherigen bereits beschrieben, einen geraden, einen konvexen oder konkaven Verlauf aufweisen kann.

Darüber hinaus ist es bevorzugt, dass das Stahlturmringsegment eine Vielzahl an ersten Durchgangsöffnungen und/oder eine Vielzahl an ersten Befestigungsöffnungen umfasst.

Gemäß einem weiteren Aspekt wird die eingangs genannte Aufgabe gelöst durch einen Windenergieanlagen-Turmabschnitt, umfassend ein erstes Stahlturmringsegment gemäß mindestens einer der im Vorherigen beschriebenen Ausführungsvarianten, ein zweites Stahlturmringsegment, umfassend ein zweites Mantelsegment mit einer Segmenthöhe, einer Segmentlänge in Segmentumfangsrichtung, einer zweiten Segmentstärke, und einer zweiten Horizontalstoßseite, wobei das zweite Mantelsegment in einem Bereich angrenzend an die zweite Horizontalstoßseite einen zweiten Verdickungsbereich aufweist, wobei der zweite Verdickungsbereich eine zweite Verdickungsstärke aufweist, die größer ist als die zweite Segmentstärke, wobei ausgehend von der zweiten Horizontalstoßseite eine zweite Befestigungsöffnung, die vorzugsweise als Sackloch ausgebildet ist, in dem zweiten Verdickungsbereich angeordnet ist, wobei das erste Stahlturmringsegment und das zweite Stahlturmringsegment mit der ersten Horizontalstoßseite und der zweiten Horizontalstoßseite derart aneinanderstoßen, dass die erste Durchgangsöffnung und die zweite Befestigungsöffnung eine gemeinsame Durchgangsachse aufweisen, und wobei ein erstes Befestigungselement in der ersten Durchgangsöffnung und in der zweiten Befestigungsöffnung derart angeordnet ist, dass das erste Stahlturmringsegment und das zweite Stahlturmringsegment miteinander verbunden sind.

Die zweite Segmentstärke ist vorzugsweise gleich der ersten Segmentstärke. Alternativ vorzugsweise ist die zweite Segmentstärke geringer oder größer als die erste Segmentstärke.

Der erste Verdickungsbereich und der zweite Verdickungsbereich sind benachbart zueinander angeordnet. Das erste Befestigungselement ist vorzugsweise eine Schraube, die sich von der ersten Ausnehmung ausgehend durch die erste Durchgangsöffnung erstreckt und in einem Gewinde der zweiten Befestigungsöffnung eingeschraubt ist. Darüber hinaus kann das erste Befestigungselement als ein Gewindebolzen ausgebildet sein.

Ferner ist es bevorzugt, dass in dem zweiten Verdickungsbereich eine zweite Aussparung angeordnet ist, wobei eine zweite Durchgangsöffnung von der zweiten Aussparung zu der zweiten Horizontalstoßseite führt, ausgehend von der ersten Horizontalstoßseite eine erste Befestigungsöffnung, die vorzugsweise als Sackloch ausgebildet ist, in dem ersten Verdickungsbereich angeordnet ist, wobei die erste Befestigungsöffnung in Segmentumfangsrichtung versetzt zu der ersten Durchgangsöffnung angeordnet ist, die erste Durchgangsöffnung und die zweite Durchgangsöffnung in Segmentumfangsrichtung versetzt zueinander angeordnet sind, und ein zweites Befestigungselement in der zweiten Durchgangsöffnung und der ersten Befestigungsöffnung angeordnet ist.

Das zweite Befestigungselement ist vorzugsweise eine Schraube, die sich ausgehend von der zweiten Ausnehmung durch die zweite Durchgangsöffnung erstreckt und in einem Gewinde der ersten Befestigungsöffnung eingeschraubt ist. Ferner kann das zweite Befestigungselement ein Gewindebolzen sein, der ferner vorzugsweise mit einer Mutter angeordnet ist. Der Gewindebolzen kann voreingeschraubt werden. In der ersten Befestigungsöffnung können nach der Herstellung noch Späne vorhanden sein. Diese Späne können die Einschraubtiefe reduzieren und somit zu einem Blockieren einer Schraube führen, wobei dies lediglich schwierig zu erkennen ist. Die Gewindebolzen können vormontiert und die Einschraubtiefe dabei kontrolliert werden. Der Gewindebolzen und die Mutter können speziell beschichtet werden, sodass die Gewindereibwerte reduziert sind.

Die Befestigungen des ersten Stahlturmringsegments an dem zweiten Stahlturmringsegment sind in dieser bevorzugten Fortbildung analog zu der Verbindung des zweiten Stahlturmringsegments mit dem ersten Stahlturmringsegment ausgebildet. Beide Stahlturmringsegmente weisen in dieser bevorzugten Ausführungsvariante Aussparungen auf, von denen ausgehend Befestigungselemente durch die Durchgangsöffnungen bis hin zu Befestigungsöffnungen des jeweils anderen Stahlturmringsegments sich erstrecken.

In einer weiteren bevorzugen Fortbildung des Windenergieanlagen-Turmabschnitts ist vorgesehen, dass das erste Befestigungselement in der zweiten Befestigungsöffnung fest, und vorzugsweise lösbar, angeordnet ist und durch die erste Durchgangsöffnung in die erste Aussparung hineinragt, und in der ersten Aussparung ein erster Querbolzen mit einer Querbolzenöffnung angeordnet ist, und sich das erste Befestigungselement durch die Querbolzenöffnung hindurch erstreckt und das erste Befestigungselement mit dem Querbolzen derart gekoppelt ist, dass diese eine feste Verbindung zwischen dem ersten Stahlturmringsegment und dem zweiten Stahlturmringsegment bewirken. Die Querbolzenöffnung ist vorzugsweise koaxial zur ersten Durchgangsöffnung angeordnet.

Das erste Befestigungselement ist vorzugsweise als Gewindebolzen ausgebildet. Der Gewindebolzen weist vorzugsweise im Bereich angrenzend an sein erstes und an sein zweites Ende ein Gewinde auf. Mit einem Ende ist der Gewindebolzen in ein Gewinde der zweiten Befestigungsöffnung eingeschraubt. Das erste Befestigungselement steht somit aus der zweiten Horizontalstoßseite heraus. Das erste Stahlturmringsegment ist derart an dem zweiten Stahlturmringsegment angeordnet, dass der Abschnitt des ersten Befestigungselements, der aus der zweiten Horizontalstoßseite auskragt, sich durch die erste Durchgangsöffnung hin zur ersten Aussparung erstreckt.

Das erste Befestigungselement ragt mit einem Ende in die erste Aussparung hinein. In der ersten Aussparung ist ferner der erste Querbolzen mit der Querbolzenöffnung angeordnet. Das erste Befestigungselement ragt durch die Querbolzenöffnung derart hindurch, dass vertikal über oder unter dem Querbolzen ein Ende des ersten Befestigungselements herausragt. Dieses herausragende Ende des Befestigungselements ist mit dem Querbolzen gekoppelt. Vorzugsweise ist dieses Ende des Befestigungselements mit einer Mutter oder einer Dehnhülse verbunden. Die Mutter oder die Dehnhülse weisen ein zu dem Gewinde des ersten Befestigungselements korrespondierendes Gewinde auf. Durch das Aufschrauben der Mutter oder der Dehnhülse erreicht die Fläche der Mutter oder der Dehnhülse, die der ersten Horizontalstoßseite zugewandt ist, den Querbolzen. Dadurch kann eine feste Verbindung des ersten Befestigungselements in der zweiten Befestigungsöffnung und in der ersten Aussparung erreicht werden, sodass eine feste Verbindung zwischen dem ersten Stahlturmringsegment und dem zweiten Stahlturmringsegment erreicht wird. Das erste Befestigungselement kann als ein Gewindebolzen ausgebildet sein.

Gemäß einer weiteren bevorzugen Fortbildung des Windenergieanlagen-Turmabschnitts ist vorgesehen, dass die erste Befestigungsseite einen konkaven Querschnitt und der Querbolzen einen zu der ersten Befestigungsseite korrespondierende konvexe Auflageseite aufweist. Ein derartig ausgebildeter Querbolzen kann positionsgenau in der ersten Aussparung angeordnet werden. Darüber hinaus ist es bevorzugt, dass die zweite Befestigungsseite einen konkaven Querschnitt und ein zweiter Querbolzen eine zu der zweiten Befestigungsseite korrespondierende konvexe Auflageseite aufweist. Diese bevorzugte Fortbildung vereinfacht die Montage des Windenergieanlagen-Turmabschnitts, sodass hier Kosten und Zeit eingespart werden können.

Gemäß einem weiteren Aspekt wird die eingangs genannte Aufgabe gelöst durch einen Windenergieanlagen-Turm umfassend wenigstens einen Windenergieanlagen-Turmabschnitt gemäß mindestens einer der im Vorherigen beschriebenen Ausführungsvarianten.

Gemäß einer bevorzugten Ausführungsvariante des Windenergieanlagen-Turms ist vorgesehen, dass der Turmabschnitt in einem Bereich angrenzend an ein unteres Ende des Turms, insbesondere angrenzend an ein Turmfundament, angeordnet ist. Vorzugsweise erstreckt sich dieser Bereich ausgehend von dem unteren Ende mit weniger als 10 %, weniger als 20 %, weniger als 30 %, weniger als 40 %, weniger als 50 %, weniger als 60 %, weniger als 70 % oder weniger als 80 % der Länge des Turms in vertikaler Richtung.

Ferner wird die eingangs genannte Aufgabe gelöst durch eine Windenergieanlage umfassend einen Windenergieanlagen-Turm gemäß dem im Vorherigen beschriebenen Aspekt.

Darüber hinaus wird die eingangs genannte Aufgabe gelöst durch ein Verfahren zur Herstellung eines Stahlturmringsegments für einen Windenergieanlagen-Turmabschnitt, umfassend Bereitstellen eines Mantelsegments, mit einem ersten Verdickungsbereich, der an eine erste Horizontalstoßseite grenzt, Einbringen einer ersten Aussparung in den ersten Verdickungsbereich, wobei die erste Aussparung beabstandet von der ersten Horizontalstoßseite ist, wobei sich die erste Aussparung in Richtung der ersten Segmentstärke vollständig durch den ersten Verdickungsbereich erstreckt, Einbringen einer ersten Durchgangsöffnung, die von der ersten Aussparung zu der ersten Horizontalstoßseite führt.

Die eingangs genannte Aufgabe wird außerdem gelöst durch ein Verfahren zur Herstellung eines Windenergieanlagen-Turmabschnitts, umfassend Bereitstellen eines ersten Stahlturmringsegments nach mindestens einer der im Vorherigen beschriebenen Ausführungsvarianten, Bereitstellen eines zweiten Stahlturmringsegments umfassend ein zweites Mantelsegment mit einer Segmenthöhe, einer Segmentlänge in Segmentumfangsrichtung, einer zweiten Segmentstärke, und einer zweiten Horizontalstoßseite, wobei das zweite Mantelsegment in einem Bereich angrenzend an die zweite Horizontalstoßseite einen zweiten Verdickungsbereich aufweist, wobei der zweite Verdickungsbereich eine zweite Verdickungsstärke aufweist, die größer ist als die zweite Segmentstärke, wobei ausgehend von der zweiten Horizontalstoßseite eine zweite Befestigungsöffnung, die vorzugsweise als Sackloch ausgebildet ist, in dem zweiten Verdickungsbereich angeordnet ist, Anordnen des ersten Stahlturmringsegments und des zweiten Stahlturmringsegments mit der ersten Horizontalstoßseite und der zweiten Horizontalstoßseite derart aneinander, dass die erste Durchgangsöffnung und die zweite Befestigungsöffnung eine gemeinsame Durchtrittsachse aufweisen, Anordnen eines Befestigungselements in der ersten Durchgangsöffnung und in der zweiten Befestigungsöffnung, insbesondere Einsetzen und/oder Einschrauben einer Schraube zunächst in der ersten Durchgangsöffnung und danach in der zweiten Befestigungsöffnung oder Einsetzen und/oder Einschrauben eines Gewindebolzens.

Gemäß einem weiteren Aspekt wird die eingangs genannte Aufgabe gelöst durch ein Verfahren zur Herstellung eines Windenergieanlagen-Turmabschnitts, umfassend Bereitstellen eines ersten Stahlturmringsegments nach mindestens einer der im Vorherigen beschriebenen Ausführungsvarianten, Bereitstellen eines zweiten Stahlturmringsegments umfassend ein zweites Mantelsegment mit einer Segmenthöhe, einer Segmentlänge in Segmentumfangsrichtung, einer zweiten Segmentstärke, und einer zweiten Horizontalstoßseite, wobei das zweite Mantelsegment in einem Bereich angrenzend an die zweite Horizontalstoßseite einen zweiten Verdickungsbereich aufweist, wobei der zweite Verdickungsbereich eine zweite Verdickungsstärke aufweist, die größer ist als die zweite Segmentstärke, wobei ausgehend von der zweiten Horizontalstoßseite eine zweite Befestigungsöffnung, die vorzugsweise als Sackloch ausgebildet ist, in dem zweiten Verdickungsbereich angeordnet ist, Anordnen eines Querbolzens mit einer Querbolzenöffnung in der ersten Aussparung, Befestigen, insbesondere durch Einschrauben, eines ersten Befestigungselements, insbesondere eines Gewindebolzens, in der zweiten Befestigungsöffnung, Anordnen der ersten Horizontalstoßseite und der zweiten Horizontalstoßseite derart aneinander, dass das erste Befestigungselement durch die erste Durchgangsöffnung und die Querbolzenöffnung in die erste Aussparung ragt, Anordnen eines Fixierungselements, beispielsweise einer Mutter und/oder einer Dehnhülse, an dem Befestigungselement derart, dass das erste Stahlturmringsegment und das zweite Stahlturmringsegment miteinander verbunden sind.

Die erfindungsgemäßen Verfahren und ihre möglichen Fortbildungen weisen Merkmale bzw. Verfahrensschritte auf, die sie insbesondere dafür geeignet machen, für ein im Vorherigen genanntes Stahlturmringsegment und seine Fortbildungen verwendet zu werden. Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen des Stahlturmringsegments verwiesen.

Bevorzugte Ausführungsbeispiele werden exemplarisch anhand der beiliegenden Figuren erläutert. Es zeigen:
- Fig. 1:: eine schematische, dreidimensionale Ansicht einer beispielhaften Ausführungsform einer Windenergieanlage;
- Fig. 2:: eine schematische, zweidimensionale Ansicht einer beispielhaften Ausführungsform eines Windenergieanlagen-Turmabschnitts;
- Fig. 3:: eine weitere schematische, zweidimensionale Ansicht einer beispielhaften Ausführungsform eines Windenergieanlagen-Turmabschnitts;
- Fig. 4:: eine schematische, zweidimensionale Detailansicht einer beispielhaften Ausführungsform eines Windenergieanlagen-Turmabschnitts;
- Fig. 5:: eine schematische, zweidimensionale Detailansicht einer beispielhaften Ausführungsform eines Windenergieanlagen-Turmabschnitts;
- Fig. 6:: einen im Stand der Technik bekannten Flansch zur Verbindung von Turmsegmenten;
- Fig. 7:: ein schematisches Verfahren zur Herstellung eines Stahlturmringsegments;
- Fig. 8:: ein schematisches Verfahren zur Herstellung eines Windenergieanlagen-Turmabschnitts; und
- Fig. 9:: ein weiteres schematisches Verfahren zur Herstellung eines Windenergieanlagen-Turmabschnitts.

In den Figuren sind gleiche oder im Wesentlichen funktionsgleiche bzw. -ähnliche Elemente mit den gleichen Bezugszeichen bezeichnet.

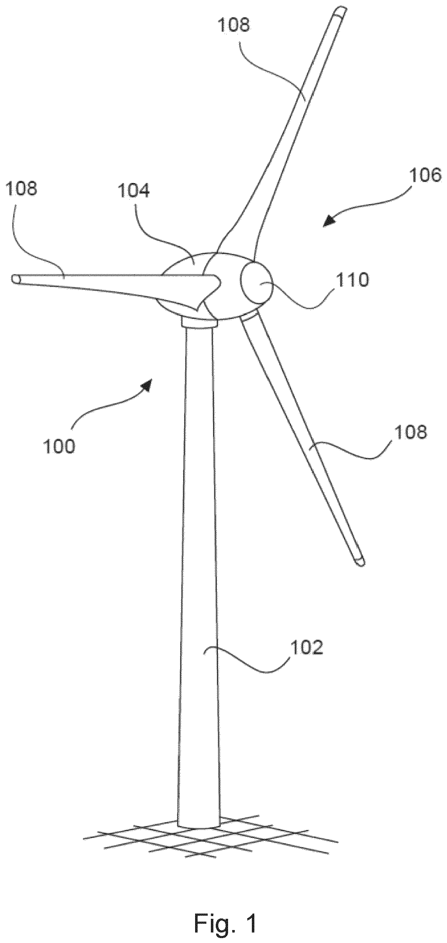

Fig. 1 zeigt eine schematische Darstellung einer Windenergieanlage. Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Der Turm 102 umfasst einen Turmabschnitt 120. Der Turmabschnitt 120 umfasst ein erstes Stahlturmringsegment 122 und ein zweites Stahlturmringsegment 124. Beispielhafte Ausführungsvarianten des Turmabschnitts 120 sowie der Stahlturmringsegmente 122, 124 sind der vorhergehenden sowie der nachfolgenden Beschreibung zu entnehmen.

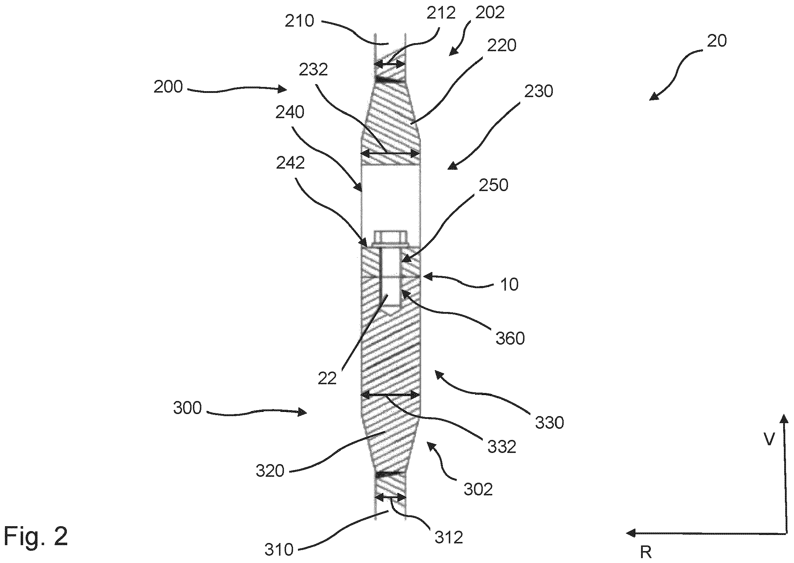

Fig. 2 zeigt eine schematische, zweidimensionale Ansicht eines Windenergieanlagen-Turmabschnitts. Der Turmabschnitt 20 umfasst ein erstes Stahlturmringsegment 200 und ein zweites Stahlturmringsegment 300. Das erste Stahlturmringsegment 200 und das zweite Stahlturmringsegment 300 stoßen mit ihren Horizontalstoßseiten an einem Stoß 10 zusammen. Das erste Stahlturmringsegment 200 umfasst ein erstes Mantelsegment 202. Das erste Mantelsegment 202 erstreckt sich in vertikaler Richtung V mit einer Segmenthöhe, wobei ein dem Stoß 10 abgewandter Abschnitt des ersten Mantelsegments 202 nicht gezeigt ist. In radialer Richtung R erstreckt sich das Mantelsegment 202 mit einer Segmentstärke 212 und im Verdickungsbereich 230 mit einer Verdickungsstärke 232. Orthogonal zur vertikalen Richtung V und zur radialen Richtung R erstreckt sich das Mantelsegment 202 in die Bildebene hinein mit einer Segmentlänge in Segmentumfangsrichtung.

Das erste Mantelsegment 202 weist in dem Bereich angrenzend an die erste Horizontalstoßseite, also angrenzend an den Stoß 10, den ersten Verdickungsbereich 230 auf. Der erste Verdickungsbereich 230 weist die erste Aussparung 240 auf. Die erste Aussparung 240 ist als Durchgangsaussparung ausgebildet, sodass sich diese von einer Innenseite des Turmabschnitts 220 hin zu einer Außenseite des Turmabschnitts 220 erstreckt. Die erste Aussparung 240 bildet zudem eine erste Befestigungsseite 242 aus, die der ersten Horizontalstoßseite zugewandt ist.

Von der ersten Aussparung 240 ausgehend führt eine erste Durchgangsöffnung 250 hin zu der Horizontalstoßseite. Die erste Durchgangsöffnung 250 weist zwei offene Enden auf. Ein erstes offenes Ende grenzt an die erste Aussparung 240 und somit endet die erste Durchgangsöffnung 250 mit einem ersten Ende an der ersten Befestigungsseite 242. Mit dem anderen, zweiten Ende endet die Durchgangsöffnung 250 an der ersten Horizontalstoßseite. Der Verdickungsbereich 230 weist in radialer Richtung R eine größere Materialstärke 232 auf als die übrige Segmentwandung 210 mit ihrer Segmentstärke 212.

Der Übergang von der übrigen Segmentwandung 210 hin zu dem Verdickungsbereich 230 wird durch einen Übergangsbereich 220 ausgebildet. Der Übergangsbereich 220 weist eine Stärke auf, die von der ersten Segmentstärke 210 zu der ersten Verdickungsstärke 232 ansteigt. Dieser Anstieg ist hier vorliegend linear ausgebildet. Der Übergang kann jedoch auch in der in Fig. 2 gezeigten Perspektive konkav oder konvex ausgebildet sein.

Das zweite Stahlturmringsegment 300 weist ein zweites Mantelsegment 302 auf. Das zweite Mantelsegment 302 erstreckt sich analog zum ersten Stahlturmringsegment 200 mit einer Segmenthöhe in vertikaler Richtung V, einer Segmentlänge in Segmentumfangsrichtung in die Bildebene hinein, bzw. heraus, und mit einer zweiten Segmentstärke 312 bzw. im Verdickungsbereich 330 mit einer Verdickungsstärke 232 in radialer Richtung R. Vorzugsweise weist der Großteil des zweiten Stahlturmringsegments 300 eine zweite Segmentstärke 312 auf, die geringer ist als die zweite Verdickungsstärke 332. Zwischen dem Verdickungsbereich 330 und der übrigen zweiten Segmentwandung 310 ist analog zum ersten Stahlturmringsegment 200 ein Übergangsbereich 320 angeordnet.

Das zweite Stahlturmringsegment weist ausgehend von seiner Horizontalstoßseite eine zweite Befestigungsöffnung 360 auf, die als Sackloch ausgebildet ist. Die Befestigungsöffnungsachse der Befestigungsöffnung 360 ist im Wesentlichen in vertikaler Richtung V ausgerichtet.

Durch die bestimmungsgemäße Anordnung des ersten und zweiten Stahlturmringsegments 200, 300 sind die Befestigungsöffnungsachse der zweiten Befestigungsöffnung 360 und eine Durchgangsachse der ersten Durchgangsöffnung 250 im Wesentlichen koaxial angeordnet.

In der ersten Durchgangsöffnung 250 und der zweiten Befestigungsöffnung 360 ist ein erstes Befestigungselement 22 angeordnet. Das erste Befestigungselement ist als Schraube ausgebildet. Die Schraube 22 ist ausgehend von der ersten Aussparung 240 durch die erste Durchgangsöffnung 250 geführt und in ein Gewinde der zweiten Befestigungsöffnung 360 eingeschraubt. Durch diese Schraubverbindung werden das erste Stahlturmringsegment 200 und das zweite Stahlturmringsegment 300 miteinander verbunden.

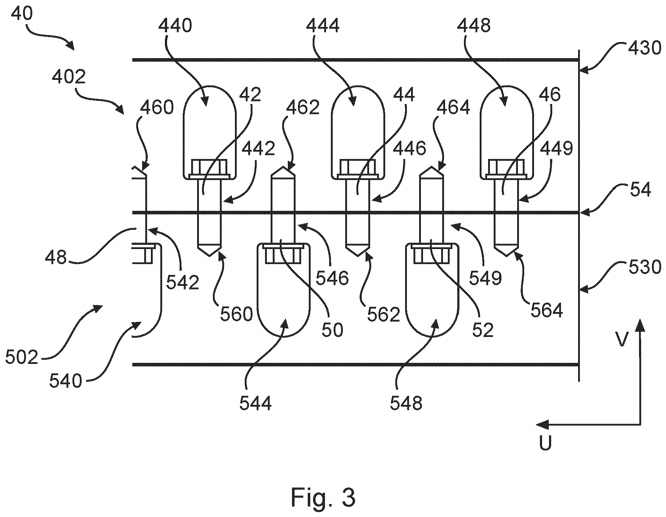

Fig. 3 zeigt eine weitere schematische, zweidimensionale Ansicht eines Windenergieanlagen-Turmabschnitts. Der Turmabschnitt 40 weist ein erstes Stahlturmringsegment mit einem ersten Mantelsegment 402 und ein zweites Stahlturmringsegment mit einem zweiten Mantelsegment 502 auf. Das erste Mantelsegment 402 weist in einem Bereich angrenzend an eine erste Horizontalstoßseite den ersten Verdickungsbereich 430 auf.

Das zweite Mantelsegment 502 weist in einem Bereich angrenzend an seine zweite Horizontalstoßseite einen zweiten Verdickungsbereich 530 auf. Das erste Mantelsegment 402 und das zweite Mantelsegment 502 stoßen mit ihren Horizontalstoßseiten an einem im Wesentlichen horizontalen Stoß 54 aneinander. Das erste Mantelsegment 402 und das zweite Mantelsegment 502 erstrecken sich jeweils mit einer Segmenthöhe in vertikaler Richtung V, mit einer Segmentlänge in Segmentumfangsrichtung U und in Richtung einer ersten und zweiten Segmentstärke und Verdickungsstärke, wobei die Stärke in die Bildebene hinein bzw. heraus ausgerichtet ist. Die Segmentumfangsrichtung U ist vorzugsweise gekrümmt. Vorzugsweise ist der Turmabschnitt 40 ein Kreisringsegment, sodass die Segmentumfangsrichtung jeweils in tangentialer Richtung an einzelnen Stellen des Turmabschnitts 40 ausgerichtet ist.

Das erste Mantelsegment 402 weist in Segmentumfangsrichtung beabstandet drei Aussparungen 440, 444, 448 auf. Ausgehend von den Aussparungen 440, 444, 448 führen erste Durchgangsöffnungen 442, 446, 449 hin zur ersten Horizontalstoßseite.

Das erste Mantelsegment 402 weist erste Befestigungsöffnungen 460, 462, 464 auf, die sich ausgehend von der ersten Horizontalstoßseite in den Verdickungsbereich 430 erstrecken. Die ersten Befestigungsöffnungen 460, 462, 464 sind als Sacklöcher ausgebildet. Die ersten Befestigungsöffnungen 460, 462, 464 weisen Befestigungsöffnungsachsen auf, die im Wesentlichen parallel zur vertikalen Richtung V ausgerichtet sind. Eine Befestigungsöffnung der Befestigungsöffnungen 460, 462, 464 ist jeweils zwischen zwei Durchgangsöffnungen 442, 446, 449 angeordnet. Befestigungsöffnungen 460, 462, 464 und Durchgangsöffnungen 442, 446, 449 sind in Umfangsrichtung U alternierend angeordnet. Die der ersten Horizontalstoßseite zugewandten Befestigungsseiten der Aussparungen 440, 444, 448 sind in Bezug auf die Segmenthöhe in vertikaler Richtung V auf der gleichen Höhe angeordnet.

Das zweite Mantelsegment 502 weist zweite Aussparungen 540, 544, 548 auf, die in Segmentumfangsrichtung U voneinander beabstandet sind. Die der zweiten Horizontalstoßseite zugewandten Befestigungsseiten der Aussparungen 540, 544, 548 sind in Bezug auf die Segmenthöhe in vertikaler Richtung V auf der gleichen Höhe angeordnet.

Das zweite Mantelsegment 502 weist ferner zweite Befestigungsöffnungen 560, 562, 564 auf. Die Befestigungsöffnung 560 ist zwischen der Durchgangsöffnung 542 und der Durchgangsöffnung 546 angeordnet. Die Beabstandung der Befestigungsöffnung 560 zu der ersten benachbarten Durchgangsöffnung 542 ist gleich der Beabstandung zu der zweiten benachbarten Durchgangsöffnung 546. Analog hierzu ist die Befestigungsöffnung 562 zwischen der Durchgangsöffnung 546 und der Durchgangsöffnung 549 angeordnet.

Die Durchgangsöffnungen 442, 446, 449 des ersten Mantelsegments 402 sind derart angeordnet, dass diese zu den entsprechend angeordneten Befestigungsöffnungen 560, 562, 564 derart angeordnet sind, dass jeweils eine Durchgangsöffnung 542, 446, 449 des ersten Mantelsegments 402 und eine dazugehörige Befestigungsöffnung 560, 562, 564 des zweiten Mantelsegments 502 eine koaxiale Achse aufweisen. Aufgrund dessen besteht die Möglichkeit, dass ein Befestigungselement 42, 44, 46 durch eine erste Durchgangsöffnung 442, 446, 449 hindurch zu einer zweiten Befestigungsöffnung 560, 562, 564 führt und in den Befestigungsöffnungen 560, 562, 564 eingeschraubt werden kann. Die Befestigungselemente 42, 44, 46 sind vorliegend als Schrauben ausgebildet.

Analog hierzu sind ausgehend von den Aussparungen 540, 544, 548 des zweiten Mantelsegments 502 Befestigungselemente 48, 50, 52 durch die zweiten Durchgangsöffnungen 542, 546, 549 hin zu den ersten Befestigungsöffnungen 460, 462, 464 des ersten Mantelsegments 402 geführt. Dadurch wird eine feste Verbindung der Stahlturmringsegmente ermöglicht.

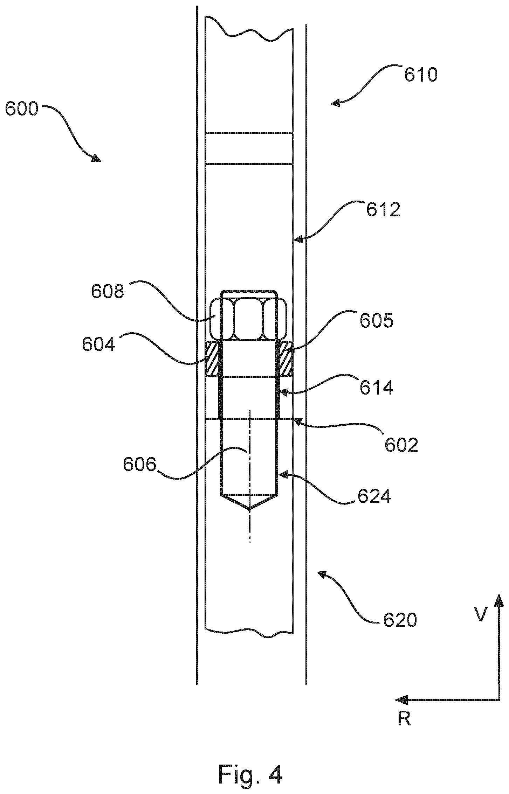

Fig. 4 zeigt eine schematische, zweidimensionale Detailansicht eines Windenergieanlagen-Turmabschnitts. Der Turmabschnitt 600 umfasst ein erstes Mantelsegment 610 eines ersten Stahlturmringsegments und ein zweites Mantelsegment 620 eines zweiten Stahlturmringsegments. Das erste Mantelsegment 610 weist in einem Verdickungsbereich eine erste Aussparung 612 auf. Von der ersten Aussparung 612 ausgehend, erstreckt sich eine erste Durchgangsöffnung 614 hin zu einer ersten Horizontalstoßseite des ersten Mantelsegments 610, die an einem Stoß 602 an eine zweite Horizontalstoßseite des zweiten Mantelsegments 620 trifft.

Das zweite Mantelsegment 620 weist eine zweite Befestigungsöffnung 624 auf. Die erste Durchgangsöffnung 614 und die zweite Befestigungsöffnung 624 weisen eine koaxial ausgerichtete Achse auf. In der ersten Aussparung 612 ist ein erster Querbolzen 604 angeordnet. Ein erstes Befestigungselement 606 ist in der zweiten Befestigungsöffnung 624 befestigt. Vorzugsweise weist das erste Befestigungselement 606 ein Gewinde auf, mit dem es in ein korrespondierendes Gewinde der zweiten Befestigungsöffnung 624 eingeschraubt ist.

Das erste Befestigungselement 606 erstreckt sich ausgehend von der Befestigung in der zweiten Befestigungsöffnung 624 durch die erste Durchgangsöffnung 614 hinein in die Aussparung 612. Der Querbolzen 604 weist eine Querbolzenöffnung 605 auf, die derart angeordnet und ausgebildet ist, dass diese eine Durchgangsachse aufweist, die koaxial mit den Achsen der Befestigungsöffnung 624 und der ersten Durchgangsöffnung 614 ausgerichtet ist. Das erste Befestigungselement erstreckt sich ebenfalls durch die Querbolzenöffnung 605.

An dem dem zweiten Mantelsegment 620 abgewandten Ende des ersten Befestigungselements 606 ist eine Mutter 608 angeordnet. An diesem Ende des Befestigungselements 606 weist dieses vorzugsweise ebenfalls ein Gewinde auf. Auf dieses Gewinde ist die Mutter 608 aufgeschraubt. Die Mutter stützt sich mit ihrer dem zweiten Stahlturmringsegment zugewandten Seite auf dem Querbolzen 604 ab. Durch ein Aufschrauben der Mutter 608 auf das Befestigungselement 606 wird eine Spannung erzeugt, sodass eine feste Verbindung zwischen dem ersten Stahlturmringsegment und dem zweiten Stahlturmringsegment realisiert wird.

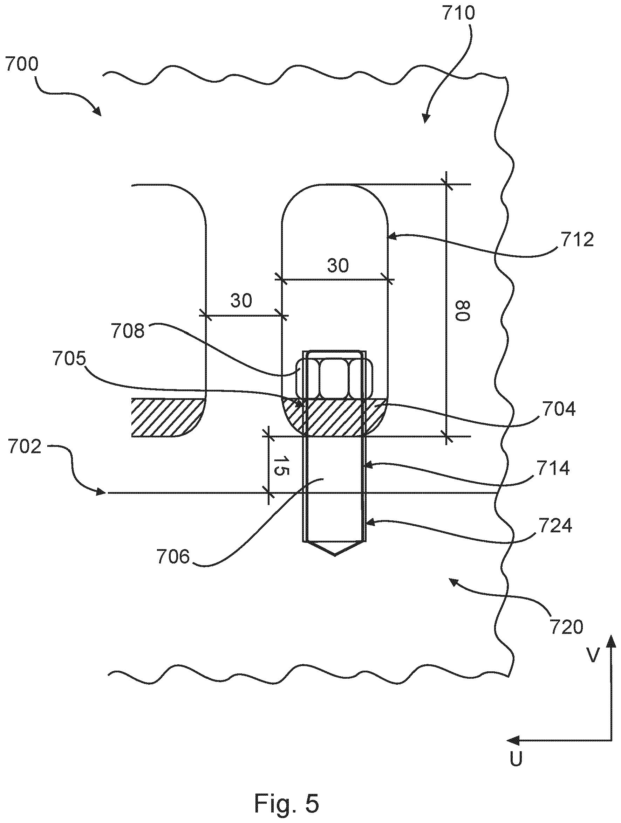

Fig. 5 zeigt eine schematische, zweidimensionale Detailansicht eines Windenergieanlagen-Turmabschnitts. Der Turmabschnitt weist ein erstes Mantelsegment 710 und ein zweites Mantelsegment 720 auf, die an einem horizontalen Stoß 702 mit ihren Horizontalstoßseiten aneinanderstoßen. Das erste Mantelsegment 710 weist eine erste Aussparung 712 auf, von der ausgehend eine erste Durchgangsöffnung 714 bis zur Horizontalstoßseite führt. Korrespondierend zu dieser ersten Durchgangsöffnung 714 weist das zweite Mantelsegment 720 eine zweite Befestigungsöffnung 724 auf.

In der zweiten Befestigungsöffnung 724 ist ein erstes Befestigungselement 706 fest, jedoch vorzugsweise lösbar, angeordnet. Das erste Befestigungselement 706 erstreckt sich ausgehend von der zweiten Befestigungsöffnung 724 durch die erste Durchgangsöffnung 714, durch eine Querbolzenöffnung 705 eines Querbolzens 704, der in der ersten Aussparung 712 angeordnet ist, hinein in die erste Aussparung 712. In der ersten Aussparung 712 ist das erste Befestigungselement 706 mit einer Mutter 708 gesichert. Die Mutter 708 stützt sich mit ihrer der Horizontalstoßseite zugewandten Seite auf dem Querbolzen 704 ab.

Die erste Befestigungsseite der Aussparung 712 ist konkav ausgebildet. Der Querbolzen 704 weist eine konvexe Seite auf, die der ersten Befestigungsseite zugewandt ist. Die konvexe, der ersten Befestigungsseite zugewandte, Seite des Querbolzens 704 ist halbkreisförmig ausgebildet. Die der ersten Befestigungsseite abgewandte Seite des Querbolzens 704 ist im Wesentlichen eben ausgebildet. Durch diese ebene Ausbildung dieser der ersten Befestigungsseite abgewandten Seite des Querbolzens 704, kann diese als Anlagefläche für die Mutter 708 wirken.

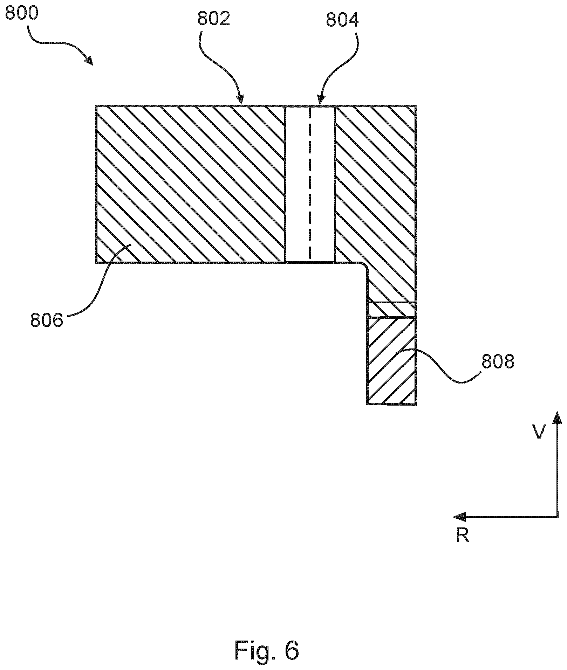

Fig. 6 zeigt einen im Stand der Technik bekannten Flansch zur Verbindung von Turmsegmenten. Die vergleichsweise dünnwandige Segmentwandung 808 des Segments 800 endet in einem massiven Flansch 806. Der Flansch 806 weist eine Vielzahl an Flanschöffnungen 804 auf, mit denen der Flansch 806 an einem korrespondierend gegenüberliegenden Flansch angeordnet und befestigt werden kann. Der Flansch 806 des Segments 800 stößt mit seiner Horizontalstoßseite 802 an einen entsprechend weiteren Flansch an.

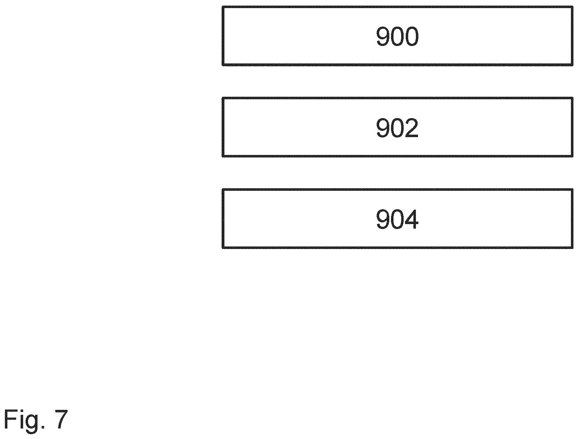

Fig. 7 zeigt ein schematisches Verfahren zur Herstellung eines Stahlturmringsegments. Das Verfahren umfasst ein Bereitstellen 900 eines Mantelsegments, mit einem ersten Verdickungsbereich, der an eine erste Horizontalstoßseite angrenzt. Des Weiteren umfasst das gezeigte Verfahren ein Einbringen 902 einer ersten Aussparung in den ersten Verdickungsbereich, wobei die erste Aussparung beabstandet von der ersten Horizontalstoßseite ist. Außerdem ist der Verfahrensschritt eines Einbringens 904 einer ersten Durchgangsöffnung gezeigt, die von der ersten Aussparung zu der ersten Horizontalstoßseite führt.

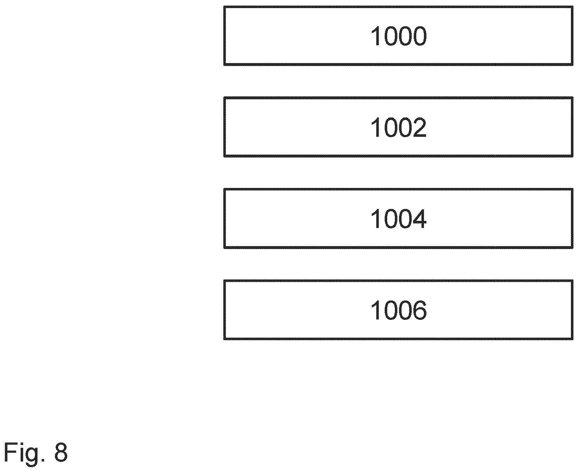

Fig. 8 zeigt ein schematisches Verfahren zur Herstellung eines Windenergieanlagen-Turmabschnitts. Das Verfahren umfasst den Schritt eines Bereitstellens 1000 eines ersten Stahlturmringsegments nach mindestens einer der im Vorherigen beschriebenen Ausführungsvarianten. Ferner ist der Verfahrensschritt eines Bereitstellens 1002 eines zweiten Stahlturmringsegments gezeigt. Das zweite Stahlturmringsegment umfasst ein zweites Mantelsegment mit einer Segmenthöhe, einer Segmentlänge in Segmentumfangsrichtung, einer zweiten Segmentstärke, und einer zweiten Horizontalstoßseite.

Das zweite Mantelsegment weist in einem Bereich angrenzend an die zweite Horizontalstoßseite einen zweiten Verdickungsbereich auf, wobei der zweite Verdickungsbereich eine zweite Verdickungsstärke aufweist, die größer ist als die zweite Segmentstärke. Ausgehend von der zweiten Horizontalstoßseite ist eine zweite Befestigungsöffnung in dem zweiten Verdickungsbereich angeordnet. Die zweite Befestigungsöffnung ist vorzugsweise als Sackloch ausgebildet.

Ferner umfasst das in Figur 8 gezeigte Verfahren den Schritt eines Anordnens 1004 des ersten Stahlturmringsegments und des zweiten Stahlturmringsegments mit der ersten Horizontalstoßseite und der zweiten Horizontalstoßseite derart aneinander, dass die erste Durchgangsöffnung und die zweite Befestigungsöffnung eine gemeinsame Durchtrittsachse aufweisen.

Außerdem ist der Verfahrensschritt eines Anordnens 1006 eines Befestigungselements in der ersten Durchgangsöffnung und in der zweiten Befestigungsöffnung gezeigt. Dies kann insbesondere ein Einsetzen und/oder ein Einschrauben einer Schraube zunächst in der ersten Durchgangsöffnung und danach in der zweiten Befestigungsöffnung umfassen oder sein oder Einsetzen und/oder Einschrauben eines Gewindebolzens.

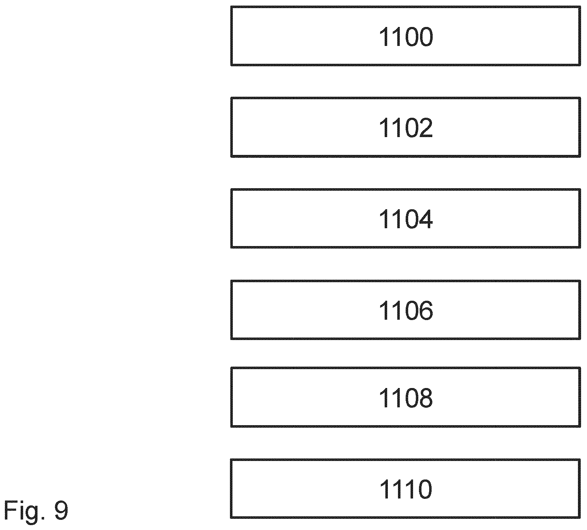

Fig. 9 zeigt ein weiteres schematisches Verfahren zur Herstellung eines Windenergieanlagen-Turmabschnitts. Das Verfahren umfasst den Schritt eines Bereitstellens 1100 eines ersten Stahlturmringsegments nach mindestens einer der im Vorherigen beschriebenen Ausführungsvarianten. Darüber hinaus umfasst das gezeigte Verfahren den Schritt eines Bereitstellens 1102 eines zweiten Stahlturmringsegments umfassend ein zweites Mantelsegment mit einer Segmenthöhe, einer Segmentlänge in Segmentumfangsrichtung, einer zweiten Segmentstärke, und einer zweiten Horizontalstoßseite.

Das zweite Mantelsegment weist in einem Bereich angrenzend an die zweite Horizontalstoßseite einen zweiten Verdickungsbereich auf. Der zweite Verdickungsbereich weist ferner eine zweite Verdickungsstärke auf, die größer ist als die zweite Segmentstärke. Ausgehend von der zweiten Horizontalstoßseite ist eine zweite Befestigungsöffnung, die vorzugsweise als Sackloch ausgebildet ist, in dem zweiten Verdickungsbereich angeordnet.

Das in Figur 9 gezeigte Verfahren weist ferner den Schritt eines Anordnens 1104 eines Querbolzens mit einer Querbolzenöffnung in der ersten Aussparung auf. Darüber hinaus ist der Schritt eines Befestigens 1106, insbesondere durch Einschrauben, eines ersten Befestigungselements, insbesondere eines Gewindebolzens, in der zweiten Befestigungsöffnung gezeigt. Ferner umfasst das Verfahren den Schritt eines Anordnens 1108 der ersten Horizontalstoßseite und der zweiten Horizontalstoßseite derart aneinander, dass das erste Befestigungselement durch die erste Durchgangsöffnung und die Querbolzenöffnung in die erste Aussparung ragt. Darüber hinaus umfasst das Verfahren ein Anordnen 1110 eines Fixierungselements, beispielsweise einer Mutter und/oder einer Dehnhülse, an dem Befestigungselement derart, dass das erste Stahlturmringsegment und das zweite Stahlturmringsegment miteinander verbunden sind.

### BEZUGSZEICHEN

- 10: Stoß
- 12: erstes Befestigungselement
- 20: Turmabschnitt
- 22: Befestigungselement
- 40: Turmabschnitt
- 42: Befestigungselement
- 44: Befestigungselement
- 46: Befestigungselement
- 48: Befestigungselement
- 50: Befestigungselement
- 52: Befestigungselement
- 54: Stoß
- 100: Windenergieanlage
- 102: Turm
- 104: Gondel
- 106: Rotor
- 108: Rotorblätter
- 110: Spinner
- 120: Turmabschnitt
- 122: erstes Stahlturmringsegment
- 124: zweites Stahlturmringsegment
- 200: erstes Stahlturmringsegment
- 202: erstes Mantelsegment
- 210: erste Segmentwandung
- 212: erste Segmentstärke
- 220: Übergangsbereich
- 230: Verdickungsbereich
- 232: Verdickungsstärke
- 240: erste Aussparung
- 242: erste Befestigungsseite
- 250: erste Durchgangsöffnung
- 300: zweites Stahlturmringsegment
- 302: zweites Mantelsegment
- 310: zweite Segmentwandung
- 312: zweite Segmentstärke
- 320: Übergangsbereich
- 330: Verdickungsbereich
- 332: Verdickungsstärke
- 360: Befestigungsöffnung
- 402: erstes Mantelsegment
- 430: erster Verdickungsbereich
- 440: Aussparung
- 442: Durchgangsöffnung
- 444: Aussparung
- 446: Durchgangsöffnung
- 448: Aussparung
- 449: Durchgangsöffnung
- 460: Befestigungsöffnung
- 462: Befestigungsöffnung
- 464: Befestigungsöffnung
- 502: zweites Mantelsegment
- 530: zweiter Verdickungsbereich
- 540: Aussparung
- 542: Durchgangsöffnung
- 544: Aussparung
- 546: Durchgangsöffnung
- 548: Aussparung
- 549: Durchgangsöffnung
- 560: Befestigungsöffnung
- 562: Befestigungsöffnung
- 564: Befestigungsöffnung
- 600: Turmabschnitt
- 602: Stoß
- 604: Querbolzen
- 605: Querbolzenöffnung
- 606: erstes Befestigungselement
- 608: Mutter
- 610: erstes Mantelsegment
- 612: erste Aussparung
- 614: erste Durchgangsöffnung
- 620: zweites Mantelsegment
- 624: zweite Befestigungsöffnung
- 700: Turmabschnitt
- 702: Stoß
- 704: Querbolzen
- 705: Querbolzenöffnung
- 706: erstes Befestigungselement
- 708: Mutter
- 710: erstes Mantelsegment
- 712: erste Aussparung
- 714: erste Durchgangsöffnung
- 720: zweites Mantelsegment
- 724: zweite Befestigungsöffnung
- 800: Segment
- 802: Horizontalstoßseite
- 804: Flanschöffnung
- 806: Flansch
- 808: Segmentwandung
- R: radiale Richtung
- U: Umfangsrichtung
- V: vertikale Richtung

## Patentansprüche

1. Stahlturmringsegment (122) für einen Windenergieanlagen-Turmabschnitt (120), umfassend
- ein erstes Mantelsegment (202), mit
∘ einer Segmenthöhe,
∘ einer Segmentlänge in Segmentumfangsrichtung,
∘ einer ersten Segmentstärke (212), und
∘ einer ersten Horizontalstoßseite,
- wobei das erste Mantelsegment (202) in einem Bereich angrenzend an die erste Horizontalstoßseite einen ersten Verdickungsbereich (230) aufweist, wobei
∘ der erste Verdickungsbereich (230) eine erste Verdickungsstärke (232) aufweist, und
∘ die erste Verdickungsstärke (232) größer ist als die erste Segmentstärke (212),
- wobei der erste Verdickungsbereich (230) eine erste Aussparung (240) aufweist, wobei die erste Aussparung (240) beabstandet von der ersten Horizontalstoßseite angeordnet ist, und
- wobei eine erste Durchgangsöffnung (250) von der ersten Aussparung (240) zu der ersten Horizontalstoßseite führt, daurch gekennzeichnet, dass
- sich die erste Aussparung (240) in Richtung der ersten Segmentstärke (212) vollständig durch den ersten Verdickungsbereich (230) erstreckt.

2. Stahlturmringsegment (122) gemäß Anspruch 1, wobei
- die erste Durchgangsöffnung (250) eine im Wesentlichen parallel zu der Segmenthöhe ausgerichtete Durchgangsachse aufweist.

3. Stahlturmringsegment (122) gemäß mindestens einem der vorherigen Ansprüche, wobei
- eine der ersten Horizontalstoßseite zugewandte erste Befestigungsseite der ersten Aussparung (240) eine plane Fläche aufweist, wobei vorzugsweise die plane Fläche an die Durchgangsöffnung (250) angrenzt, oder
- die erste Befestigungsseite konkav ausgebildet ist, und vorzugsweise ein Querbolzen mit einer konvexen Auflageseite an der ersten Befestigungsseite anordenbar ist, oder
- die erste Befestigungsseite rinnenförmig ausgebildet ist, wobei ein Rinnengrund in Richtung der ersten Verdickungsstärke (232) ausgerichtet ist, und der Querschnitt orthogonal zu der Richtung der ersten Verdickungsstärke (232) halbkreisförmig ausgebildet ist, und vorzugsweise an der ersten Befestigungsseite ein Querbolzen mit halbkreisförmigen Querschnitt anordenbar ist.

4. Stahlturmringsegment (122) gemäß mindestens einem der vorherigen Ansprüche, wobei
- der erste Verdickungsbereich (230) einen ersten Übergangsbereich (320) aufweist, wobei im Übergangsbereich (320) eine Mantelsegmentstärke von der ersten Segmentstärke (212) hin zur ersten Verdickungsstärke (232) ansteigt, vorzugsweise kontinuierlich ansteigt, und/oder
- ausgehend von der ersten Horizontalstoßseite eine erste Befestigungsöffnung (360), die vorzugsweise als Sackloch ausgebildet ist, in dem ersten Verdickungsbereich (230) angeordnet ist, deren Befestigungsöffnungsachse im Wesentlichen parallel zur Durchgangsachse der ersten Durchgangsöffnung (250) ausgerichtet ist, und eine erste Befestigungsöffnung (360) in Segmentumfangsrichtung versetzt zu der ersten Durchgangsöffnung (250) angeordnet ist.

5. Stahlturmringsegment (122) gemäß mindestens einem der vorherigen Ansprüche, wobei
- sich das Mantelsegment (202) orthogonal zu der Segmenthöhe und orthogonal zu der Segmentumfangsrichtung in einer radialen Richtung erstreckt, und der erste Verdickungsbereich (230) in radialer Richtung in eine erste Richtung und in eine der ersten Richtung entgegengesetzt gerichtete zweite Richtung vorspringt, und vorzugsweise der erste Verdickungsbereich (230) mit der gleichen Vorsprungslänge in die erste Richtung und in die zweite Richtung vorspringt.

6. Stahlturmringsegment (122) gemäß mindestens einem der vorherigen Ansprüche, umfassend
- eine Vielzahl an ersten Durchgangsöffnungen (250) und/oder eine Vielzahl an ersten Befestigungsöffnungen (360).

7. Windenergieanlagen-Turmabschnitt (120), umfassend
- ein erstes Stahlturmringsegment (122) gemäß mindestens einem der vorhergehenden Ansprüche,
- ein zweites Stahlturmringsegment (124),
∘ umfassend ein zweites Mantelsegment (502) mit einer Segmenthöhe, einer Segmentlänge in Segmentumfangsrichtung, einer zweiten Segmentstärke, und einerzweiten Horizontalstoßseite,
∘ wobei das zweite Mantelsegment (502) in einem Bereich angrenzend an die zweite Horizontalstoßseite einen zweiten Verdickungsbereich (530) aufweist, wobei der zweite Verdickungsbereich eine zweite Verdickungsstärke aufweist, die größer ist als die zweite Segmentstärke,
∘ wobei ausgehend von der zweiten Horizontalstoßseite eine zweite Befestigungsöffnung, die vorzugsweise als Sackloch ausgebildet ist, in dem zweiten Verdickungsbereich (530) angeordnet ist,
- wobei das erste Stahlturmringsegment (122) und das zweite Stahlturmringsegment (124) mit der ersten Horizontalstoßseite und der zweiten Horizontalstoßseite derart aneinanderstoßen, dass die erste Durchgangsöffnung und die zweite Befestigungsöffnung eine gemeinsame Durchgangsachse aufweisen, und
- wobei ein erstes Befestigungselement in der ersten Durchgangsöffnung und in der zweiten Befestigungsöffnung derart angeordnet ist, dass das erste Stahlturmringsegment (122) und das zweite Stahlturmringsegment (124) miteinander verbunden sind.

8. Windenergieanlagen-Turmabschnitt (120) gemäß dem vorhergehenden Anspruch, wobei
- in dem zweiten Verdickungsbereich eine zweite Aussparung angeordnet ist, wobei eine zweite Durchgangsöffnung von der zweiten Aussparung zu der zweiten Horizontalstoßseite führt,
- ausgehend von der ersten Horizontalstoßseite eine erste Befestigungsöffnung, die vorzugsweise als Sackloch ausgebildet ist, in dem ersten Verdickungsbereich angeordnet ist, wobei die erste Befestigungsöffnung in Segmentumfangsrichtung versetzt zu der ersten Durchgangsöffnung angeordnet ist,
- die erste Durchgangsöffnung und die zweite Durchgangsöffnung in Segmentumfangsrichtung zueinander angeordnet sind, und
- ein zweites Befestigungselement in der zweiten Durchgangsöffnung und der ersten Befestigungsöffnung angeordnet ist.

9. Windenergieanlagen-Turmabschnitt (120) gemäß mindestens einem der vorhergehenden Ansprüche 7-8, wobei
- das erste Befestigungselement in der zweiten Befestigungsöffnung fest angeordnet ist und durch die erste Durchgangsöffnung in die erste Aussparung hineinragt, und
- in der ersten Aussparung ein erster Querbolzen mit einer Querbolzenöffnung angeordnet ist, und sich das erste Befestigungselement durch die Querbolzenöffnung hindurch erstreckt und das erste Befestigungselement mit dem Querbolzen derart gekoppelt ist, dass diese eine feste Verbindung zwischen dem ersten Stahlturmringsegment und dem zweiten Stahlturmringsegment bewirken.

10. Windenergieanlagen-Turmabschnitt (120) gemäß mindestens einem der vorhergehenden Ansprüche 7-9, wobei
- eine erste Befestigungsseite einen konkaven Querschnitt und ein Querbolzen einen zu der ersten Befestigungsseite korrespondierende konvexe Auflageseite aufweist.

11. Windenergieanlagen-Turm (102) umfassend wenigstens einen Windenergieanlagen-Turmabschnitt (120) gemäß mindestens einem der Ansprüche 7-10.

12. Windenergieanlage (100) umfassend einen Windenergieanlagen-Turm (102) gemäß dem vorhergehenden Anspruch.

13. Verfahren zur Herstellung eines Stahlturmringsegments (122) für einen Windenergieanlagen-Turmabschnitt (120), umfassend
- Bereitstellen eines Mantelsegments, mit einem ersten Verdickungsbereich, der an eine erste Horizontalstoßseite grenzt,
- Einbringen einer ersten Aussparung in den ersten Verdickungsbereich, wobei die erste Aussparung beabstandet von der ersten Horizontalstoßseite ist,
- Einbringen einer ersten Durchgangsöffnung, die von der ersten Aussparung zu der ersten Horizontalstoßseite führt, **dadurch gekennzeichnet, dass**
- sich die erste Aussparung (240) in Richtung der ersten Segmentstärke (212) vollständig durch den ersten Verdickungsbereich (230) erstreckt.

14. Verfahren zur Herstellung eines Windenergieanlagen-Turmabschnitts (120), umfassend
- Bereitstellen eines ersten Stahlturmringsegments (122) gemäß mindestens einem der Ansprüche 1-6 durch Herstellung eines Stahlturmringsegments (122) gemäß dem vorhergehenden Anspruch,
- Bereitstellen eines zweiten Stahlturmringsegments (124) umfassend ein zweites Mantelsegment mit einer Segmenthöhe, einer Segmentlänge in Segmentumfangsrichtung, einer zweiten Segmentstärke, und einer zweiten Horizontalstoßseite, wobei das zweite Mantelsegment in einem Bereich angrenzend an die zweite Horizontalstoßseite einen zweiten Verdickungsbereich aufweist, wobei der zweite Verdickungsbereich eine zweite Verdickungsstärke aufweist, die größer ist als die zweite Segmentstärke, wobei ausgehend von der zweiten Horizontalstoßseite eine zweite Befestigungsöffnung, die vorzugsweise als Sackloch ausgebildet ist, in dem zweiten Verdickungsbereich angeordnet ist,
- Anordnen des ersten Stahlturmringsegments und des zweiten Stahlturmringsegments mit der ersten Horizontalstoßseite und der zweiten Horizontalstoßseite derart aneinander, dass die erste Durchgangsöffnung und die zweite Befestigungsöffnung eine gemeinsame Durchtrittsachse aufweisen,
- Anordnen eines Befestigungselements in der ersten Durchgangsöffnung und in der zweiten Befestigungsöffnung, insbesondere Einsetzen und/oder Einschrauben einer Schraube zunächst in der ersten Durchgangsöffnung und danach in der zweiten Befestigungsöffnung oder Einsetzen und/oder Einschrauben eines Gewindebolzens.

15. Verfahren zur Herstellung eines Windenergieanlagen-Turmabschnitts (120), umfassend
- Bereitstellen eines ersten Stahlturmringsegments (122) gemäß mindestens einem der Ansprüche 1-6 durch Herstellung eines Stahlturmringsegments (122) gemäß Anspruch 13,
- Bereitstellen eines zweiten Stahlturmringsegments (124) umfassend ein zweites Mantelsegment mit einer Segmenthöhe, einer Segmentlänge in Segmentumfangsrichtung, einer zweiten Segmentstärke, und einer zweiten Horizontalstoßseite, wobei das zweite Mantelsegment in einem Bereich angrenzend an die zweite Horizontalstoßseite einen zweiten Verdickungsbereich aufweist, wobei der zweite Verdickungsbereich eine zweite Verdickungsstärke aufweist, die größer ist als die zweite Segmentstärke, wobei ausgehend von der zweiten Horizontalstoßseite eine zweite Befestigungsöffnung, die vorzugsweise als Sackloch ausgebildet ist, in dem zweiten Verdickungsbereich angeordnet ist,
- Anordnen eines Querbolzens mit einer Querbolzenöffnung in der ersten Aussparung,
- Befestigen, insbesondere durch Einschrauben, eines ersten Befestigungselements, insbesondere eines Gewindebolzens, in der zweiten Befestigu ngsöffn u ng,
- Anordnen der ersten Horizontalstoßseite und der zweiten Horizontalstoßseite derart aneinander, dass das erste Befestigungselement durch die erste Durchgangsöffnung und die Querbolzenöffnung in die erste Aussparung ragt,
- Anordnen eines Fixierungselements, beispielsweise einer Mutter und/oder einer Dehnhülse, an dem Befestigungselement derart, dass das erste Stahlturmringsegment (122) und das zweite Stahlturmringsegment (124) miteinander verbunden sind.

## Claims

1. A steel tower ring segment (122) for a wind turbine tower section (120), comprising
- a first casing segment (202) with
∘ a segment height,
∘ a segment length in the segment circumferential direction,
∘ a first segment thickness (212), and
∘ a first horizontal joint side,
- wherein the first casing segment (202) has a first thickening region (230) in a region adjoining the first horizontal joint side, wherein
∘ the first thickening region (230) has a first thickening thickness (232), and
∘ the first thickening thickness (232) is larger than the first segment thickness (212),
- wherein the first thickening region (230) has a first cutout (240), wherein the first cutout (240) is arranged spaced apart from the first horizontal joint side, and
- wherein a first passage opening (250) leads from the first cutout (240) to the first horizontal joint side, **characterized in that**
- the first cutout (240) extends completely through the first thickening region (230) in the direction of the first segment thickness (212).

2. The steel tower ring segment (122) as claimed in claim 1, wherein
- the first passage opening (250) has a passage axis which is oriented substantially parallel to the segment height.

3. The steel tower ring segment (122) as claimed in at least one of the preceding claims, wherein
- a first fastening side, facing toward the first horizontal joint side, of the first cutout (240) has a planar surface, wherein preferably the planar surface adjoins the passage opening (250), or
- the first fastening side is of concave form, and preferably a transverse bolt with a convex bearing side can be arranged on the first fastening side, or
- the first fastening side is of trough-like form, wherein a trough base is oriented in the direction of the first thickening thickness (232), and the cross section orthogonal to the direction of the first thickening thickness (232) is of semicircle-like form, and preferably a transverse bolt with a semicircle-like cross section can be arranged on the first fastening side.

4. The steel tower ring segment (122) as claimed in at least one of the preceding claims, wherein
- the first thickening region (230) has a first transition region (320), wherein, in the transition region (320), a casing segment thickness increases, preferably increases continuously, from the first segment thickness (212) to the first thickening thickness (232), and/or
- proceeding from the first horizontal joint side, a first fastening opening (360), which is preferably in the form of a blind hole, is arranged in the first thickening region (230), the fastening opening axis of which is oriented substantially parallel to the passage axis of the first passage opening (250), and a first fastening opening (360) is arranged offset from the first passage opening (250) in the segment circumferential direction.

5. The steel tower ring segment (122) as claimed in at least one of the preceding claims, wherein,
- orthogonally to the segment height and orthogonally to the segment circumferential direction, the casing segment (202) extends in a radial direction, and, radially, the first thickening (230) region projects in a first direction and in a second direction, which is directed oppositely to the first direction, and preferably the first thickening region (230) projects with the same projection length in the first direction and in the second direction.

6. The steel tower ring segment (122) as claimed in at least one of the preceding claims, comprising
- a multiplicity of first passage openings (250) and/or a multiplicity of first fastening openings (360).

7. A wind turbine tower section (120) comprising
- a first steel tower ring segment (122) as claimed in at least one of the preceding claims,
- a second steel tower ring segment (124)
∘ which comprises a second casing segment (502) with a segment height, with a segment length in the segment circumferential direction, with a second segment thickness, and with a second horizontal joint side,
∘ wherein the second casing segment (502) has a second thickening region (530) in a region adjoining the second horizontal joint side, wherein the second thickening region has a second thickening thickness which is larger than the second segment thickness,
∘ wherein, proceeding from the second horizontal joint side, a second fastening opening, which is preferably in the form of a blind hole, is arranged in the second thickening region (530),
- wherein the first steel tower ring segment (122) and the second steel tower ring segment (124) about against one another with the first horizontal joint side and the second horizontal joint side in such a way that the first passage opening and the second fastening opening share a common passage axis, and
- wherein a first fastening element is arranged in the first passage opening and in the second fastening opening in such a way that the first steel tower ring segment (122) and the second steel tower ring segment (124) are connected to one another.

8. The wind turbine tower section (120) as claimed in the preceding claim 9, wherein
- a second cutout is arranged in the second thickening region, wherein a second passage opening leads from the second cutout to the second horizontal joint side,
- proceeding from the first horizontal joint side, a first fastening opening, which is preferably in the form of a blind hole, is arranged in the first thickening region, wherein the first fastening opening is arranged offset from the first passage opening in the segment circumferential direction,
- the first passage opening and the second passage opening are arranged to one another in the segment circumferential direction, and
- a second fastening element is arranged in the second passage opening and the first fastening opening.

9. The wind turbine tower section (120) as claimed in at least either of the preceding claims 7-8, wherein
- the first fastening element is arranged firmly in the second fastening opening and projects into the first cutout through the first passage opening, and
- a first transverse bolt with a transverse bolt opening is arranged in the first cutout, and the first fastening element extends through the transverse bolt opening, and the first fastening element is coupled to the transverse bolt in such a way that they bring about a firm connection between the first steel tower ring segment and the second steel tower ring segment.

10. The wind turbine tower section (120) as claimed in at least one of the preceding claims 7-9, wherein
- a first fastening side has a concave cross section, and a transverse bolt has a convex bearing side which corresponds to the first fastening side.

11. A wind turbine tower (102) comprising at least one wind turbine tower section (120) as claimed in at least one of claims 7-10.

12. A wind turbine (100) comprising a wind turbine tower (102) as claimed in the preceding claim.

13. A method for producing a steel tower ring segment (122) for a wind turbine tower section (120), comprising
- providing a casing segment having a first thickening region which adjoins a first horizontal joint side,
- forming a first cutout in the first thickening region, wherein the first cutout is spaced apart from the first horizontal joint side,
- forming a first passage opening which leads from the first cutout to the first horizontal joint side, **characterized in that**
- the first cutout (240) extends completely through the first thickening region (230) in the direction of the first segment thickness (212).

14. A method for producing a wind turbine tower section (120), comprising
- providing a first steel tower ring segment (122) as claimed in at least one of claims 1-6 by producing a steel tower sing segment (122) as claimed in the preceding claim,
- providing a second steel tower ring segment (124) which comprises a second casing segment with a segment height, with a segment length in the segment circumferential direction, with a second segment thickness, and with a second horizontal joint side, wherein the second casing segment has a second thickening region in a region adjoining the second horizontal joint side, wherein the second thickening region has a second thickening thickness which is larger than the second segment thickness, wherein, proceeding from the second horizontal joint side, a second fastening opening, which is preferably in the form of a blind hole, is arranged in the second thickening region,
- arranging the first steel tower ring segment and the second steel tower ring segment with the first horizontal joint side and the second horizontal joint side against one another in such a way that the first passage opening and the second fastening opening share a common passage axis,
- arranging a fastening element in the first passage opening and in the second fastening opening, in particular inserting and/or screwing a screw firstly in the first passage opening and then in the second fastening opening, or inserting and/or screwing in a threaded bolt.

15. A method for producing a wind turbine tower section (120), comprising
- providing a first steel tower ring segment (122) as claimed in at least one of claims 1-6 by producing a steel tower sing segment (122) as claimed in the claim 13,
- providing a second steel tower ring segment (124) which comprises a second casing segment with a segment height, with a segment length in the segment circumferential direction, with a second segment thickness, and with a second horizontal joint side, wherein the second casing segment has a second thickening region in a region adjoining the second horizontal joint side, wherein the second thickening region has a second thickening thickness which is larger than the second segment thickness, wherein, proceeding from the second horizontal joint side, a second fastening opening, which is preferably in the form of a blind hole, is arranged in the second thickening region,
- arranging a transverse bolt with a transverse bolt opening in the first cutout,
- fastening, in particular by screwing-in, a first fastening element, in particular a threaded bolt, in the second fastening opening,
- arranging the first horizontal joint side and the second horizontal joint side against one another in such a way that the first fastening element projects into the first cutout through the first passage opening and the transverse bolt opening,
- arranging a fixing element, for example a nut and/or an expansion sleeve, on the fastening element in such a way that the first steel tower ring segment (122) and the second steel tower ring segment (124) are connected to one another.

## Revendications

1. Segment annulaire de tour en acier (122) pour une partie de tour d'éolienne (120), comprenant
- un premier segment d'enveloppe (202), avec
o une hauteur de segment,
o une longueur de segment dans la direction circonférentielle de segment,
o une première épaisseur de segment (212), et
o une première face d'aboutement horizontale,
- dans lequel le premier segment d'enveloppe (202) présente, dans une zone adjacente à la première face d'aboutement horizontale, une première zone de renflement (230), dans lequel
o la première zone de renflement (230) présente une première épaisseur de renflement (232), et
o la première épaisseur de renflement (232) est plus grande que la première épaisseur de segment (212),
- dans lequel la première zone de renflement (230) présente un premier évidement (240), dans lequel le premier évidement (240) est disposé de manière espacée de la première face d'aboutement horizontale, et
- dans lequel une première ouverture de passage (250) mène du premier évidement (240) à la première face d'aboutement horizontale, **caractérisé en ce que**
- le premier évidement (240) s'étend en direction de la première épaisseur de segment (212) entièrement à travers la première zone de renflement (230).

2. Segment annulaire de tour en acier (122) selon la revendication 1, dans lequel
- la première ouverture de passage (250) présente un axe de passage orienté sensiblement parallèlement à la hauteur de segment.

3. Segment annulaire de tour en acier (122) selon au moins l'une des revendications précédentes, dans lequel
- une première face de fixation du premier évidement (240), tournée vers la première face d'aboutement horizontale, présente une surface plane, dans lequel de préférence la surface plane est adjacente à l'ouverture de passage (250), ou
- la première face de fixation est réalisée de manière concave, et de préférence un boulon transversal avec une face d'appui convexe peut être disposé sur la première face de fixation, ou
- la première face de fixation est réalisée en forme de gouttière, dans lequel une base de gouttière est orientée en direction de la première épaisseur de renflement (232), et la section transversale perpendiculairement à la direction de la première épaisseur de renflement (232) est réalisée en forme de demi-cercle, et de préférence un boulon transversal avec une section transversale en forme de demi-cercle peut être disposé sur la première face de fixation.

4. Segment annulaire de tour en acier (122) selon au moins l'une des revendications précédentes, dans lequel
- la première zone de renflement (230) présente une première zone de transition (320), dans lequel, dans la zone de transition (320), une épaisseur de segment d'enveloppe augmente à partir de la première épaisseur de segment (212) vers la première épaisseur de renflement (232), de préférence augmente de manière continue, et/ou
- à partir de la première face d'aboutement horizontale une première ouverture de fixation (360), qui est réalisée de préférence en tant que trou borgne, est disposée dans la première zone de renflement (230), dont l'axe d'ouverture de fixation est orienté sensiblement parallèlement à l'axe de passage de la première ouverture de passage (250), et une première ouverture de fixation (360) est disposée dans la direction circonférentielle de segment de manière décalée de la première ouverture de passage (250).

5. Segment annulaire de tour en acier (122) selon au moins l'une des revendications précédentes, dans lequel
- le segment d'enveloppe (202) s'étend perpendiculairement à la hauteur de segment et perpendiculairement à la direction circonférentielle de segment dans une direction radiale, et la première zone de renflement (230) fait saillie dans la direction radiale dans une première direction et dans une deuxième direction dirigée à l'opposé de la première direction, et de préférence la première zone de renflement (230) fait saillie avec la même longueur de saillie dans la première direction et dans la deuxième direction.

6. Segment annulaire de tour en acier (122) selon au moins l'une des revendications précédentes, comprenant
- une pluralité de premières ouvertures de passage (250) et/ou une pluralité de premières ouvertures de fixation (360).

7. Partie de tour d'éolienne (120), comprenant
- un premier segment annulaire de tour en acier (122) selon au moins l'une des revendications précédentes,
- un deuxième segment annulaire de tour en acier (124),
o comprenant un deuxième segment d'enveloppe (502) avec une hauteur de segment, une longueur de segment dans la direction circonférentielle de segment, une deuxième épaisseur de segment, et une deuxième face d'aboutement horizontale,
o dans laquelle le deuxième segment d'enveloppe (502) présente, dans une zone adjacente à la deuxième face d'aboutement horizontale, une deuxième zone de renflement (530), dans laquelle la deuxième zone de renflement présente une deuxième épaisseur de renflement, qui est plus grande que la deuxième épaisseur de segment,
o dans laquelle, à partir de la deuxième face d'aboutement horizontale, une deuxième ouverture de fixation, qui est réalisée de préférence en tant que trou borgne, est disposée dans la deuxième zone de renflement (530),
- dans laquelle le premier segment annulaire de tour en acier (122) et le deuxième segment annulaire de tour en acier (124) sont en aboutement l'un contre l'autre avec la première face d'aboutement horizontale et la deuxième face d'aboutement horizontale, de telle sorte que la première ouverture de passage et la deuxième ouverture de fixation présentent un axe de passage commun, et
- dans laquelle un premier élément de fixation est disposé dans la première ouverture de passage et dans la deuxième ouverture de fixation, de telle sorte que le premier segment annulaire de tour en acier (122) et le deuxième segment annulaire de tour en acier (124) sont reliés l'un à l'autre.

8. Partie de tour d'éolienne (120) selon la revendication précédente, dans laquelle
- un deuxième évidement est disposé dans la deuxième zone de renflement, dans laquelle une deuxième ouverture de passage mène du deuxième évidement à la deuxième face d'aboutement horizontale,
- à partir de la première face d'aboutement horizontale une première ouverture de fixation, qui est réalisée de préférence en tant que trou borgne, est disposée dans la première zone de renflement, dans laquelle la première ouverture de fixation est disposée dans la direction circonférentielle de segment de manière décalée de la première ouverture de passage,
- la première ouverture de passage et la deuxième ouverture de passage sont disposées dans la direction circonférentielle de segment l'une par rapport à l'autre, et
- un deuxième élément de fixation est disposé dans la deuxième ouverture de passage et la première ouverture de fixation.

9. Partie de tour d'éolienne (120) selon au moins l'une des revendications précédentes 7-8, dans laquelle
- le premier élément de fixation est disposé fixement dans la deuxième ouverture de fixation et fait saillie, par la première ouverture de passage, dans le premier évidement, et
- un premier boulon transversal avec une ouverture de boulon transversal est disposé dans le premier évidement, et le premier élément de fixation s'étend à travers l'ouverture de boulon transversal et le premier élément de fixation est accouplé au boulon transversal, de telle sorte que ceux-ci provoquent une liaison fixe entre le premier segment annulaire de tour en acier et le deuxième segment annulaire de tour en acier.

10. Partie de tour d'éolienne (120) selon au moins l'une des revendications précédentes 7-9, dans laquelle
- une première face de fixation présente une section transversale concave et un boulon transversal une face d'appui convexe correspondant à la première face de fixation.

11. Tour d'éolienne comprenant au moins une partie de tour d'éolienne (120) selon au moins l'une des revendications 7-10.

12. Eolienne (100) comprenant une tour d'éolienne (102) selon la revendication précédente.

13. Procédé pour la fabrication d'un segment annulaire de tour en acier (122) pour une partie de tour d'éolienne (120), comprenant
- la fourniture d'un segment d'enveloppe, avec une première zone de renflement, qui est adjacente à une première face d'aboutement horizontale,
- le fait de ménager un premier évidement dans la première zone de renflement, dans lequel le premier évidement est espacé de la première face d'aboutement horizontale,
- le fait de ménager une première ouverture de passage, qui mène du premier évidement à la première face d'aboutement horizontale, **caractérisé en ce que**
- le premier évidement (240) s'étend en direction de la première épaisseur de segment (212) entièrement à travers la première zone de renflement (230).

14. Procédé pour la fabrication d'une partie de tour d'éolienne (120), comprenant
- la fourniture d'un premier segment annulaire de tour en acier (122) selon au moins l'une des revendications 1-6 par fabrication d'un segment annulaire de tour en acier (122) selon la revendication précédente,
- la fourniture d'un deuxième segment annulaire de tour en acier (124) comprenant un deuxième segment d'enveloppe avec une hauteur de segment, une longueur de segment dans la direction circonférentielle de segment, une deuxième épaisseur de segment, et une deuxième face d'aboutement horizontale, dans lequel le deuxième segment d'enveloppe présente, dans une zone adjacente à la deuxième face d'aboutement horizontale, une deuxième zone de renflement, dans lequel la deuxième zone de renflement présente une deuxième épaisseur de renflement, qui est plus grande que la deuxième épaisseur de segment, dans lequel, à partir de la deuxième face d'aboutement horizontale, une deuxième ouverture de fixation, qui est réalisée de préférence en tant que trou borgne, est disposée dans la deuxième zone de renflement,
- la disposition du premier segment annulaire de tour en acier et du deuxième segment annulaire de tour en acier avec la première face d'aboutement horizontale et la deuxième face d'aboutement horizontale l'une contre l'autre, de telle sorte que la première ouverture de passage et la deuxième ouverture de fixation présentent un axe de traversée commun,
- la disposition d'un élément de fixation dans la première ouverture de passage et dans la deuxième ouverture de fixation, en particulier l'insertion et/ou le vissage d'une vis tout d'abord dans la première ouverture de passage et ensuite dans la deuxième ouverture de fixation ou l'insertion et/ou le vissage d'un boulon fileté.

15. Procédé pour la fabrication d'une partie de tour d'éolienne (120), comprenant
- la fourniture d'un premier segment annulaire de tour en acier (122) selon au moins l'une des revendications 1-6 par fabrication d'un segment annulaire de tour en acier (122) selon la revendication 13,
- la fourniture d'un deuxième segment annulaire de tour en acier (124) comprenant un deuxième segment d'enveloppe avec une hauteur de segment, une longueur de segment dans la direction circonférentielle de segment, une deuxième épaisseur de segment, et une deuxième face d'aboutement horizontale, dans lequel le deuxième segment d'enveloppe présente, dans une zone adjacente à la deuxième face d'aboutement horizontale, une deuxième zone de renflement, dans lequel la deuxième zone de renflement présente une deuxième épaisseur de renflement, qui est plus grande que la deuxième épaisseur de segment, dans lequel, à partir de la deuxième face d'aboutement horizontale, une deuxième ouverture de fixation, qui est réalisée de préférence en tant que trou borgne, est disposée dans la deuxième zone de renflement,
- la disposition d'un boulon transversal avec une ouverture de boulon transversal dans le premier évidement,
- la fixation, en particulier par vissage, d'un premier élément de fixation, en particulier d'un boulon fileté, dans la deuxième ouverture de fixation,
- la disposition de la première face d'aboutement horizontale et de la deuxième face d'aboutement horizontale l'une contre l'autre, de telle sorte que le premier élément de fixation fait saillie, par la première ouverture de passage et l'ouverture de boulon transversal, dans le premier évidement,
- la disposition d'un élément de fixation, par exemple d'un écrou et/ou d'une douille élastique, sur l'élément de fixation, de telle sorte que le premier segment annulaire de tour en acier (122) et le deuxième segment annulaire de tour en acier (124) sont reliés l'un à l'autre.
